(19) Europäisches Patentamt
European Patent Office
Office européen des brevets

(11) EP 2 026 584 A1

(12) EUROPEAN PATENT APPLICATION

(43) Date of publication:
18.02.2009 Bulletin 2009/08

(51) Int Cl.:
H04N 7/26 (2006.01)

(21) Application number: 08167885.6

(22) Date of filing: 16.12.2004

(84) Designated Contracting States:
DE FR GB

(30) Priority: 27.07.2004 JP 2004219083

(62) Document number(s) of the earlier application(s) in accordance with Art. 76 EPC:
04257850.0 / 1 622 387

(71) Applicant: Fujitsu Microelectronics Limited
Tokyo 163-0722 (JP)

(72) Inventors:
• Otsuka, Tatsushi
Kanagawa 211-8588 (JP)

• Tahira, Takahiko
Kanagawa 211-8588 (JP)
• Yamori, Akihiro
Kanagawa 211-8588 (JP)

(74) Representative: Ward, James Norman
Haseltine Lake
5th Floor, Lincoln House
300 High Holborn
London WC1V 7JH (GB)

Remarks:
This application was filed on 29-10-2008 as a divisional application to the application mentioned under INID code 62.

(54) **Motion estimation and compensation device with motion vector correction based on vertical component values**

(57) There is provided a motion estimation and compensation device 10 that avoids discrepancies in chrominance components which could be introduced in the process of motion vector estimation. The device 10 has a motion vector estimator 11 for finding motion vectors in given interlace-scanning chrominance-subsampled video signals. The estimator 11 compares each candidate block B0 to B3 in a reference picture with a target block B in an original picture by using a sum of absolute differences (SAD) in luminance as similarity metric, chooses a best matching candidate block that minimizes the SAD, and determines its displacement relative to the target block. In this process, the estimator 11 gives the SAD of each candidate block 80 to B3 an offset determined from the vertical component of a corresponding motion vector, so as to avoid chrominance discrepancies. A motion compensator 12 then produces a predicted picture using such motion vectors and calculates prediction error by subtracting the predicted picture from the original picture.

FIG. 1

EP 2 026 584 A1

**Description**

This application is based upon and claims the benefits of priority from the prior Japanese Patent Application No.2004-219083, filed on July 27, 2004.

The present invention relates to a motion estimation and compensation device, and more particularly to a motion estimation and compensation device that estimates motion vectors and performs motion-compensated prediction of an interlaced sequence of chrominance-subsampled video frames.

Digital compression and coding standards of the Moving Picture Experts Group (MPEG) are widely used today in the fields of, for example, DVD videos and digital TV broadcasting to record or transmit large amounts of motion image data at a high quality. MPEG standards require the use of YCbCr color coding scheme, which represents a color using one luminance (brightness) component Y and two chrominance (color difference) components Cb and Cr. Cb gives a difference between luminance and blue components, and Cr between luminance and red components.

Since the human eye is less sensitive to color variations than to intensity variations, the YCbCr scheme allocates a greater bandwidth to luminance information than to chrominance information. In other words, people would notice image degradation in brightness, but they are more tolerant about color degradation. A video coding device can blur away the chromatic information when encoding pictures, without fear of being detected by the human eyes. The process of such color information reduction is called subsampling. There are several types of YCbCr color formats in terms of how to subsample the chromatic components of a given picture, which include, among others, 4:2:2 format and 4:2:0 format.

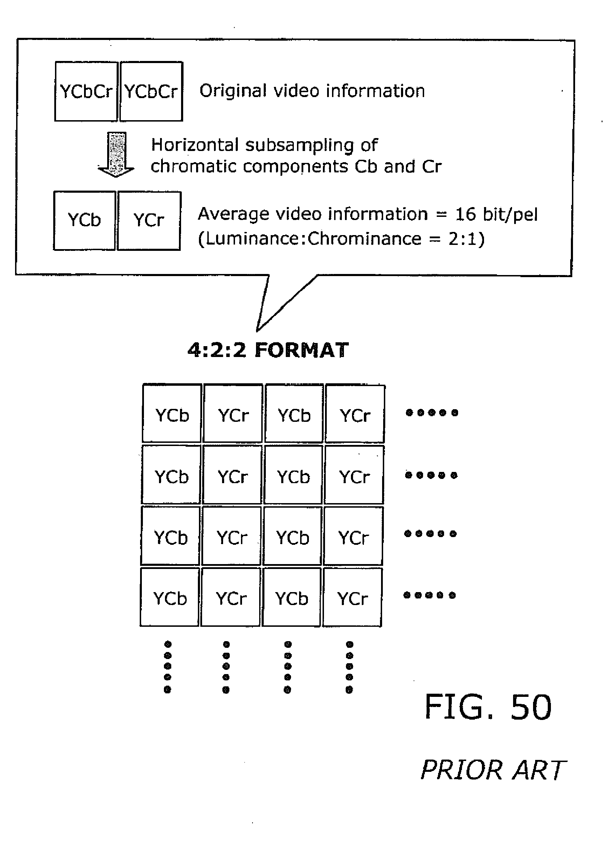

FIG. 50 shows 4:2:2 color sampling format. In a consecutive run of four picture elements (called "pels" or "pixels"), there are four 8-bit samples of Y component and two 8-bit samples each of Cb and Cr components. The 4:2:2 format only allows Cb and Cr to be placed every two pixels while giving Y to every individual pixel, whereas the original signal contains all of Y, Cb, and Cr in every pixel. In other words, two Y samples share a single set of Cb and Cr samples. Accordingly, the average amount of information contained in a 4:2:2 color signal is only 16 bits per pixel (i.e., Y(8)+Cb(8) or Y(8)+Cr(8)), whereas the original signal has 24 bits per pixel. That is, the signal contains chrominance information of one-half the luminance information.

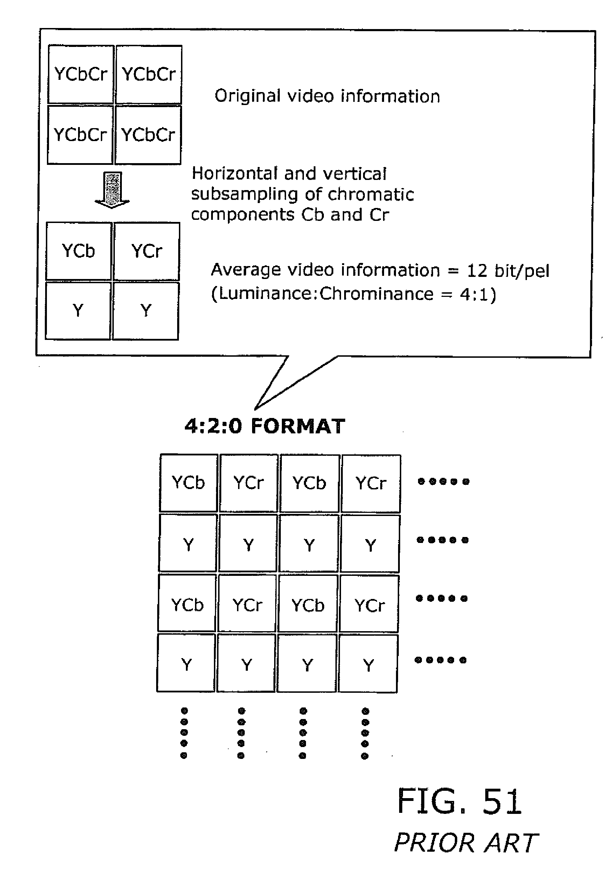

FIG. 51 shows 4:2:0 color sampling format. Compared to the above-described 4:2:2 format, the chrominance components of a picture is subsampled not only in the horizontal direction, but also in the vertical direction by a factor of 2, while the original luminance components are kept intact. That is, the 4:2:0 format assigns one pair of Cb and Cr to a box of four pixels. Accordingly, the average amount of information contained in a color signal is only 12 bits per pixel (i.e., {Y(8)×4+Cb(8)+Cr(8)}/4). This means that chrominance information contained in a 4:2:0 picture is one quarter of luminance information.

The 4:2:2 format is stipulated as ITU-R Recommendation BT.601-5 for studio encoding of digital television signals. Typical video coding equipment accepts 4:2:2 video frames as an input format. The frames are then converted into 4:2:0 format to comply with the MPEG-2 Main Profile. The resulting 4:2:0 signal is then subjected to a series of digital vide coding techniques, including motion vector search, motion-compensated prediction, discrete cosine transform (DCT), and the like.

The video coder searches given pictures to find a motion vector for each square segment, called macroblock, with a size of 16 pixels by 16 lines. This is achieved by block matching between an incoming original picture (i.e., present frame to be encoded) and a selected reference picture (i.e., frame being searched). More specifically, the coder compares a macroblock in the original picture with a predefined search window in the reference frame in an attempt to find a block in the search window that gives a smallest sum of absolute differences of their elements. If such a best matching block is found in the search window, then the video coder calculates a motion vector representing the displacement of the present macroblock with respect to the position of the best matching block. Based on this motion vector, the coder creates a predicted picture corresponding to the original macroblock.

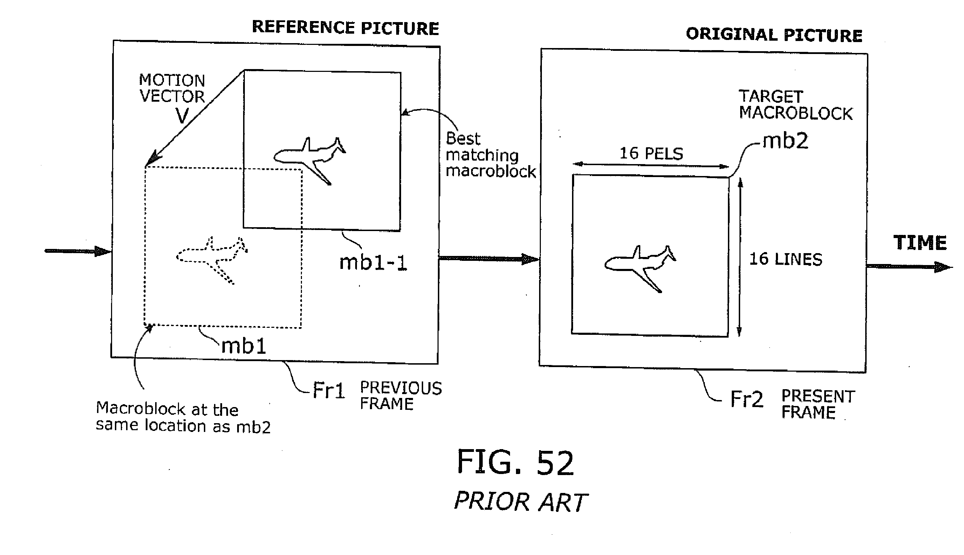

FIG. 52 schematically shows a process of finding a motion vector. Illustrated are: present frame Fr2 as an original picture to be predicted, and previous frame Fr1 as a reference picture to be searched. The present frame Fr2 contains a macroblock mb2 (target macroblock). Block matching against this target macroblock mb2 yields a similar block mb1-1 in the previous frame Fr1, along with a motion vector V representing its horizontal and vertical displacement. The pixels of this block mb1-1 shifted with the calculated motion vector V are used as predicted values of the target macroblock mb2.

More specifically, the block matching process first compares the target macroblock mb2 with a corresponding block mb1 indicated by the broken-line box mb1 in FIG. 52. If they do not match well with each other, the search algorithm then tries to find a block with a similar picture pattern in the neighborhood of mb1. For each candidate block in the reference picture, the sum of absolute differences is calculated as a cost function to evaluate the average difference between two blocks. One of such candidate blocks that minimizes this metric is regarded as a best match. In the present example, the block matching process finds a block mb1-1 as giving a minimum absolute error with respect to the target macroblock mb2 of interest, thus estimating a motion vector V as depicted in FIG. 52.

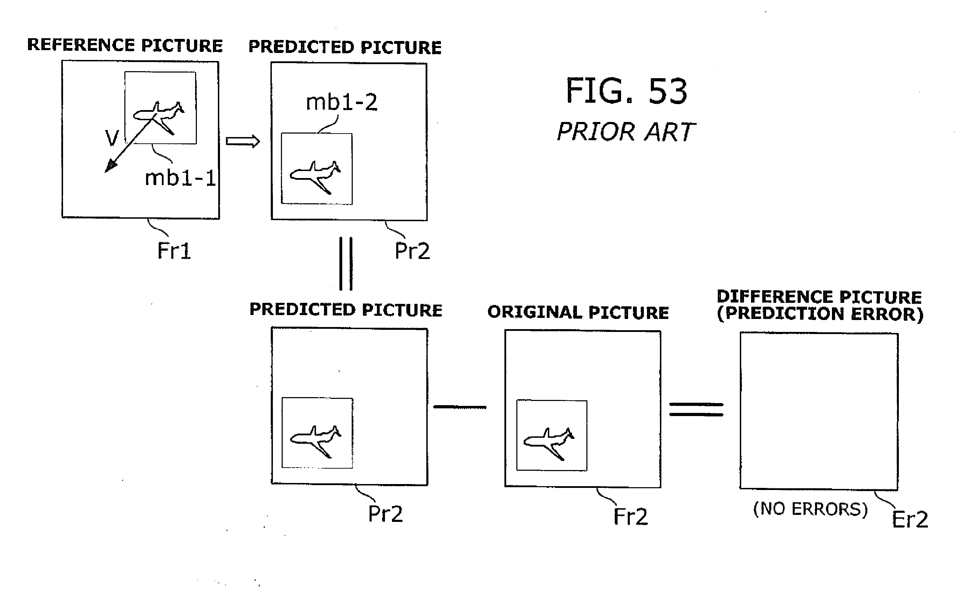

FIG. 53 schematically shows how video images are coded with a motion-compensated prediction technique. When a motion vector V is found in a reference picture Fr, the best matching block mb1-1 in this picture Fr1 is shifted in the direction of, and by the length of the motion vector V, thus creating a predicted picture Pr2 containing a shifted version of the block mb1-1. The coder then compares this predicted picture Pr2 with the present picture Fr2, thus producing a difference picture Er2 representing the prediction error. This process is called a motion-compensated prediction.

The example pictures of FIG. 52 show a distant view of an aircraft descending for landing. Since a parallel motion of a rigid-body object like this example does not change the object's appearance in the video, the motion vector V permits an exact prediction, meaning that there will be no difference between the original picture and the shifted picture. The coded data in this case will only be a combination of horizontal and vertical components of the motion vector and a piece of information indicating that there are no prediction errors.

On the other hand, if the moving object is, for example, a flying bird, there will be some amount of error between a predicted picture and an original picture since the bird changes the angle and shape of its wings while flying in the air. The video coding device applies DCT coding to this prediction error, thus yielding non-zero transform coefficients. Coded data is produced through the subsequent steps of quantization and variable-length coding.

Since motion detection is the most computation-intensive process in motion-compensated video coding, researchers have made efforts to reduce its computational load. One approach is to search only the luminance components, assuming that blocks with a minimum sum of absolute differences in the luminance domain is also likely to exhibit a minimum sum in the chrominance domain. In other words, this method skips the steps of searching color-difference components in expectation of close similarities between luminance and chrominance motion vectors, thereby reducing the total amount of computation for motion vector estimation. Besides reducing the size of arithmetic circuits, the omission of chrominance calculations lightens processing workload since it also eliminates the steps of reading chrominance data of original and reference pictures out of frame memories.

How to avoid color degradation is another aspect of motion vector estimation techniques. Some researchers propose eliminating the possibility of selecting motion vectors with a vertical component of 4n+2 (n: integer), among candidate motion vectors evaluated in the process of frame prediction. By eliminating this particular group of motion vectors, this technique alleviates color degradation in the coded video. See, for example, Japanese Patent Application Publication No. 2001-238228, paragraphs [0032] to [0047], Figure 1.

The present invention provides a motion estimation and compensation device for estimating motion vectors and performing motion-compensated prediction. This motion estimation and compensation device has a motion vector estimator and a motion compensator. The motion vector estimator estimates motion vectors representing motion in given interlace-scanning chrominance-subsampled video signals. The estimation is accomplished by comparing each candidate block in a reference picture with a target block in an original picture by using a sum of absolute differences (SAD) in luminance as similarity metric, choosing a best matching candidate block that minimizes the SAD, and determining displacement of the best matching candidate block relative to the target block. In this process, the motion vector estimator gives the SAD of each candidate block an offset determined from the vertical component of a candidate motion vector associated with that candidate block. With this motion vector correction, the estimated motion vectors are less likely to cause discrepancies in chrominance components. The motion compensator produces a predicted picture using such motion vectors and calculates prediction error by subtracting the predicted picture from the original picture.

The above and other features and advantages of the present invention will become apparent from the following description when taken in conjunction with the accompanying drawings which illustrate preferred embodiments of the present invention by way of example, and in which:

FIG. 1 is a conceptual view of a motion estimation and compensation device according to a first embodiment of the present invention.

FIGS. 2 and 3 show a reference picture and an original picture which contain a rectangular object moving in the direction from upper left to lower right.

FIGS. 4 and 5 show the relationships between 4:2:2 format and 4:2:0 format in the reference picture and original picture of FIGS. 2 and 3.

FIGS. 6 and 7 show luminance components and chrominance components of a 4:2:0 reference picture.

FIGS. 8 and 9 show luminance components and chrominance components of a 4:2:0 original picture.

FIGS. 10 and 11 show motion vectors detected in the 4:2:0 reference and original pictures.

FIGS. 12A to 16B show the problem related to motion vector estimation in a more generalized way.

FIG. 17 shows an offset table.

FIGS. 18A, 18B, 19A and 19B show how to determine an offset from transmission bitrates or chrominance edge sharpness.

FIG. 20 shows an example of a program code for motion vector estimation.

FIGS. 21A and 21B show a process of searching for pixels in calculating a sum of absolute differences.

FIG. 22 shows a reference and original pictures when the motion vector has a vertical component of 4n+2, and FIG. 23 shows a resulting difference picture.

FIG. 24 shows a reference and original pictures when the motion vector has a vertical component of 4n+1 and FIG. 25 shows a resulting difference picture.

FIG. 26 shows a reference and original pictures when the motion vector has a vertical component of 4n+0, and FIG. 27 shows a resulting difference picture.

FIG. 28 shows a reference picture and an original picture when the motion vector has a vertical component of 4n+3, and FIG. 29 shows a resulting difference picture.

FIG. 30 shows a reference picture and an original picture when the motion vector has a vertical component of 4n+1, and FIG. 29 shows a resulting difference picture.

FIG. 32 shows a reference picture and an original picture when the motion vector has a vertical component of 4n+0, and FIG. 33 shows a resulting difference picture.

FIG. 34 shows a reference picture and an original picture when the motion vector has a vertical component of 4n+2, and FIG. 35 shows a resulting difference picture.

FIG. 36 shows a reference picture and an original picture when the motion vector has a vertical component of 4n+2, and FIG. 37 shows a resulting difference picture.

FIG. 38 shows a reference picture and an original picture when the motion vector has a vertical component of 4n+0, and FIG. 39 shows a resulting difference picture.

FIG. 40 shows a program for calculating Cdiff, or the sum of absolute differences of chrominance components, including those for Cb and those for Cr.

FIG. 41 shows a conceptual view of a second embodiment of the present invention.

FIG. 42 shows how to avoid chrominance discrepancies in field prediction.

FIG. 43 is a table showing the relationship between vertical components of a frame vector and those of field vectors.

FIG. 44 shows field vectors when the frame vector has a vertical component of 4n+2.

FIG. 45 shows field vectors when the frame vector has a vertical component of 4n+1.

FIG. 46 shows field vectors when the frame vector has a vertical component of 4n+3.

FIG. 47 shows a process of 2:3 pullup and 3:2 pulldown.

FIG. 48 shows a structure of a video coding device which contains a motion estimation and compensation device according to the first embodiment of the present invention.

FIG. 49 shows a structure of a video coding device employing a motion estimation and compensation device according to a second embodiment of the present invention.

FIG. 50 shows 4:2:2 color sampling format.

FIG. 51 shows 4:2:0 color sampling format.

FIG. 52 schematically shows how a motion vector is detected.

FIG. 53 schematically shows how video images are coded with a motion-compensated prediction technique.

Digital TV broadcasting and other ordinary video applications use interlace scanning and 4:2:0 format to represent color information. Original pictures are compressed and encoded using techniques such as motion vector search, motion-compensation, and discrete cosine transform (DCT) coding. Interlacing is a process of scanning a picture by alternate horizontal lines, i.e., odd-numbered lines and even-numbered lines. In this mode, each video frame is divided into two fields called top and bottom fields.

As described earlier in FIG. 51, the 4:2:0 color sampling process subsamples chromatic information in both the horizontal and vertical directions. With this video format, however, conventional motion vector estimation could cause a quality degradation in chrominance components of motion-containing frames because the detection is based only on the luminance information of those frames. Although motionless or almost motionless pictures can be predicted with correct colors even if the motion vectors are calculated solely from luminance components, there is an increased possibility of mismatch between a block in the original picture and its corresponding block in the reference picture in their chrominance components if the video frames contain images of a moving object. Such a chrominance discrepancy would raise the level of prediction errors, thus resulting in an increased amount of coded video data, or an increased picture degradation in the case of a bandwidth-limited system.

The existing technique (Japanese Patent Application Publication No. 2001-238228) mentioned earlier partly addresses the above problem by simply rejecting motion vectors with a particular vertical component that could cause a large amount of chrominance discrepancies. This technique, however, is not always the best solution because of its insufficient consideration of other conditions concerning motion vectors.

In view of the foregoing, it is an object of the present invention to provide a motion estimation and compensation device with an improved algorithm for finding motion vectors and performing motion-compensated prediction, with a reasonable circuit size and computational load.

Preferred embodiments of the present invention will now be described below with reference to the accompanying drawings, wherein like reference numerals refer to like elements throughout.

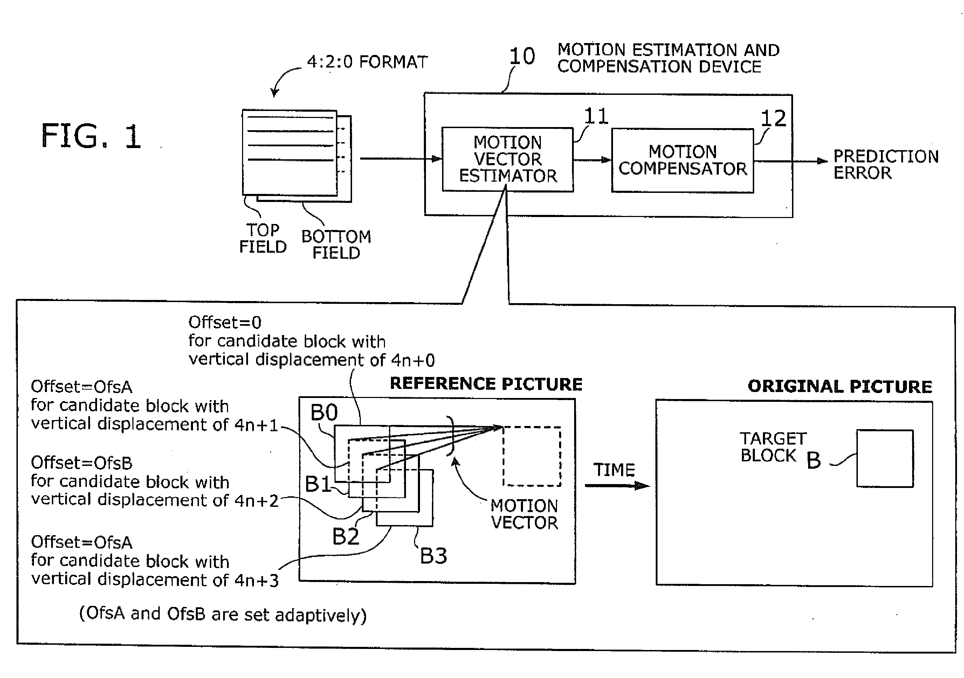

FIG. 1 is a conceptual view of a motion estimation and compensation device according to a first embodiment of the present invention. This motion estimation and compensation device 10 comprises a motion vector estimator 11 and a motion compensator 12.

The motion vector estimator 11 finds a motion vector in luminance components of an interlaced sequence of chrominance-subsampled video signals structured in 4:2:0 format by evaluating a sum of absolute differences (SAD) between a target block in an original picture and each candidate block in a reference picture. To suppress the effect of possible chrominance discrepancies in this process, the motion vector estimator 11 performs a motion vector correction that adds different offsets to the SAD values being evaluated, depending on the value that the vertical component of a motion vector can take. Here, the term "block" refers to a macroblock, or a square segment of a picture, with a size of 16 pixels by 16 lines. The motion vector estimator 11 identifies one candidate block in the reference picture that shows a minimum SAD and calculates a motion vector representing the displacement of the target block with respect to the candidate block that is found.

More specifically, referring to the bottom half of FIG. 1, the vertical component of a motion vector has a value of 4n+0, 4n+1, 4n+2, or 4n+3, where n is an integer. Those values correspond to four candidate blocks B0, B1, B2, and B3, which are compared with a given target block B in the original picture in terms of SAD between their pixels. The motion vector estimator 11 gives an offset of zero to the SAD between the target block B and the candidate block B0 located at a vertical distance of 4n+0. For the other candidate blocks B1, B2, and B3 located at vertical distances of 4n+1, 4n+2, and 4n+3, respectively, the motion vector estimator 11 gives offset values that are determined adaptively. The term "adaptively" means here that the motion vector estimator 11 determines offset values in consideration of at least one of transmission bitrate, quantization parameters, chrominance edge information, and prediction error of chrominance components. Here the quantization parameters include quantization step size, i.e., the resolution of quantized values. Details of this adaptive setting will be described later. With the motion vectors obtained in this way, the motion compensator 12 produces a predicted picture and calculates prediction error by subtracting the predicted picture from the original picture.

Chrominance Discrepancies

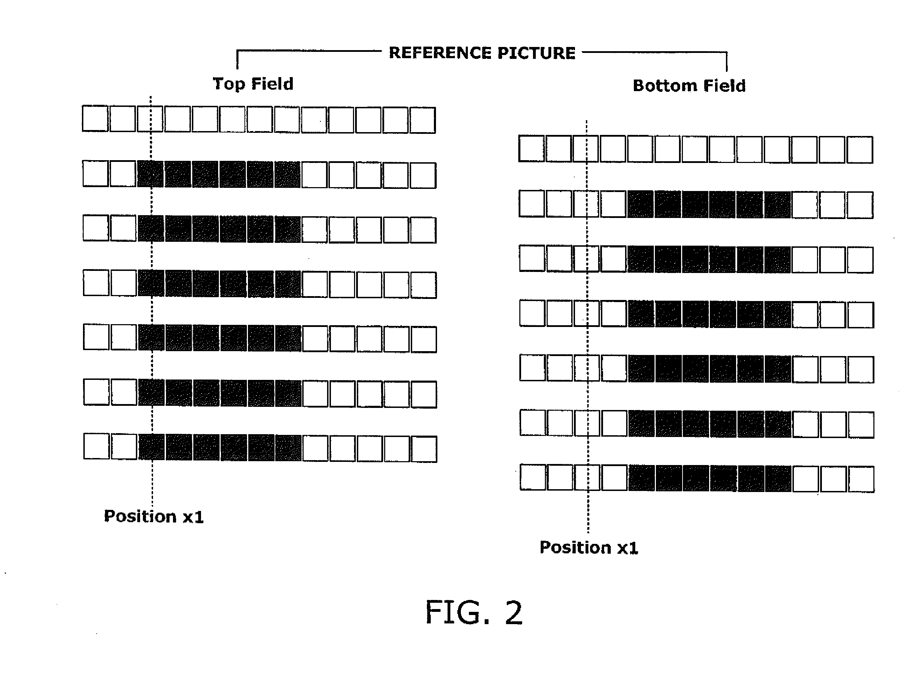

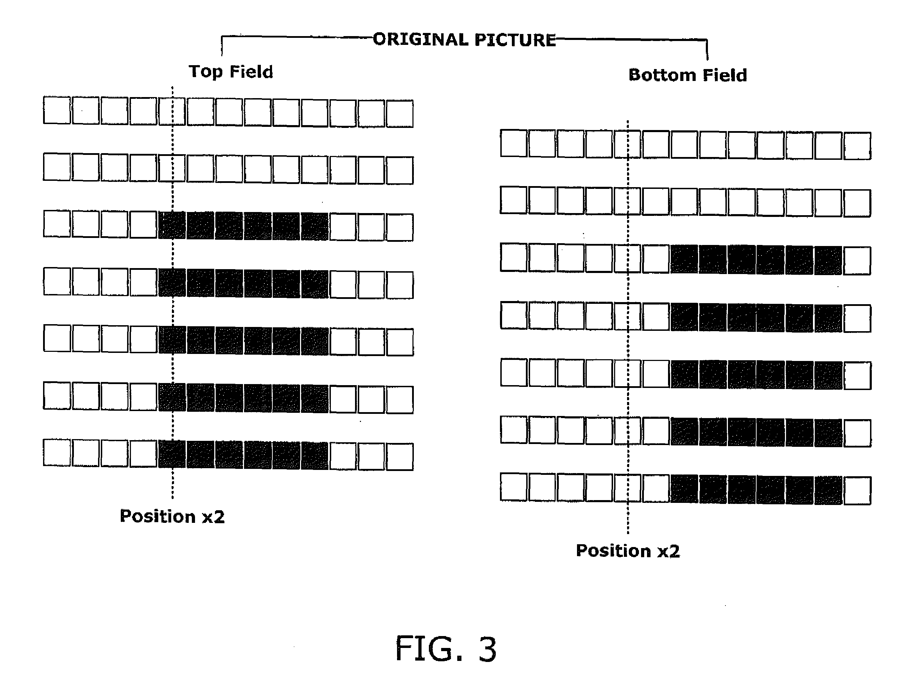

Before moving to the details of the present invention, we first elaborate the issues to be addressed by the present invention, including an overview of how to find motion vectors. FIGS. 2 and 3 show a reference picture and an original picture which contain a rectangular object moving in the direction from upper left to lower right. Specifically, FIG. 2 shows two-dimensional images of a top and bottom fields constituting a single reference picture, and FIG. 3 shows the same for an original picture. Note that both pictures represent only the luminance components of sampled video signals. Since top and bottom fields have opposite parities (i.e., one made up of the even-numbered lines, the other made up of odd-numbered lines), FIGS. 2 and 3, as well as several subsequent drawings, depict them with an offset of one line.

Compare the reference picture of FIG. 2 with the original picture of FIG. 3, where the black boxes (pixels) indicate an apparent motion of the object in the direction from upper left to lower right. It should also be noticed that, even within the same reference picture of FIG. 2, an object motion equivalent to two pixels in the horizontal direction is observed between the top field and bottom field. Likewise, FIG. 3 shows a similar horizontal motion of the object during one field period.

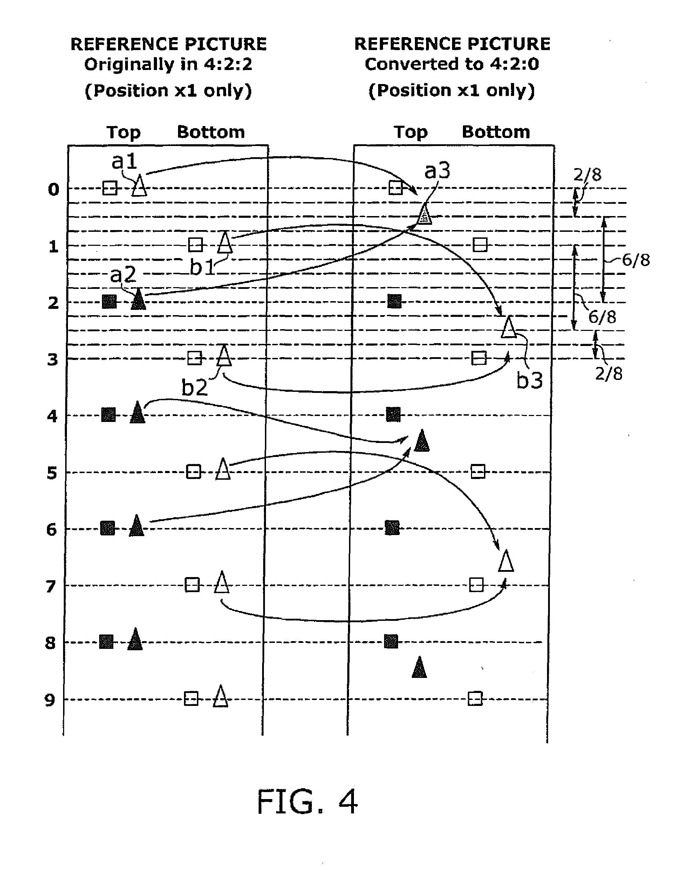

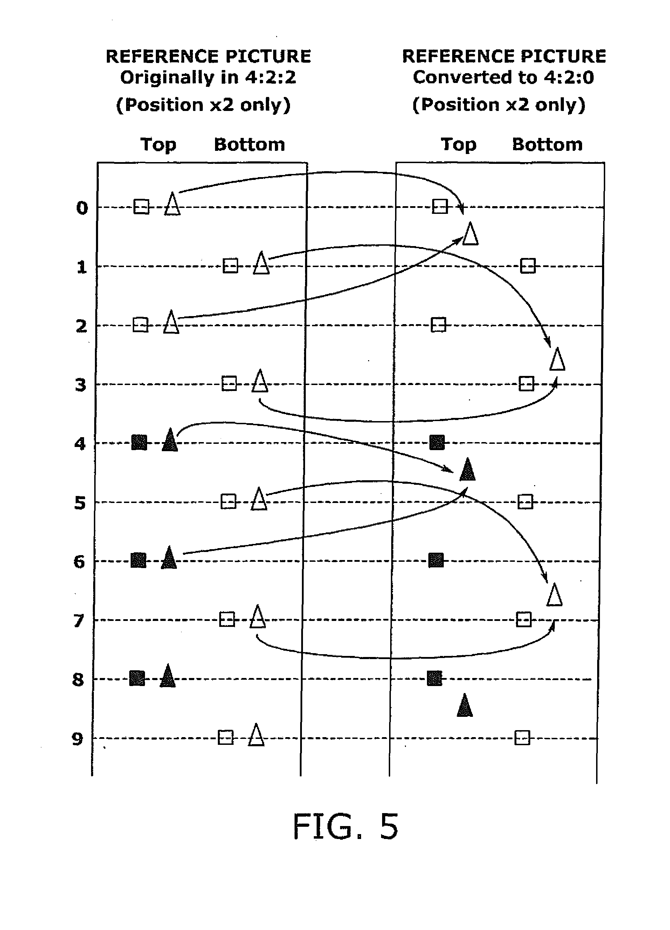

FIGS. 4 and 5 show the relationships between 4:2:2 format and 4:2:0 format in the reference picture and original picture of FIGS. 2 and 3. More specifically, FIG. 4 contrasts 4:2:2 and 4:2:0 pictures representing the same reference picture of FIG. 2, with a focus on the pixels at a particular horizontal position x1 indicated by the broken lines in FIG. 2. FIG. 5 compares, in the same manner, 4:2:2 and 4:2:0 pictures corresponding to the original picture of FIG. 3, focussing on the pixels at another horizontal position x2 indicated by the broken lines in FIG. 3.

The notation used in FIGS. 4 and 5 are as follows: White and black squares represent luminance components, and white and black triangles chrominance components, where white and black indicate the absence and presence of an object image, respectively. The numbers seen at the left end are line numbers. Even-numbered scan lines are represented by broken lines, and each two-line vertical interval is subdivided into eight sections, which are referred to by the fractions "1/8," "2/8," "3/8," and so on.

As discussed earlier, the process of converting video sampling formats from 4:2:2 to 4:2:0 actually involves chrominance subsampling operations. In the example of FIG. 4, the first top-field chrominance component a3 in the 4:2:0 picture is interpolated from chrominance components a1 and a2 in the original 4:2:2 picture. That is, the value of a3 is calculated as a weighted average of the two nearest chrominance components a1 and a2, which is actually $(6 \times a1 + 2 \times a2)/8$ since a3 is located "2/8" below a1, and "6/8" above a2. For illustrative purposes, the chrominance component a3 is represented as a gray triangle, since it is a component interpolated from a white triangle and a black triangle.

For another example, the first bottom-field chrominance component b3 in the 4:2:0 reference picture is interpolated from 4:2:2 components b1 and b2 in the same way. Since b3 is located "6/8" below b1, and "2/8" above b2, the chrominance component b3 has a value of $(2{\times}b1 + 6{\times}b2)/8$, the weighted average of its nearest chrominance components b1 and b2 in the original 4:2:2 picture. The resulting chrominance component a3 is represented as a white triangle since its source components are both white triangles. Original pictures shown in FIG. 5 are also subjected to a similar process of format conversion and color subsampling.

As can be seen from the vertical densities of luminance and chrominance components, the conversion from 4:2:2 to 4:2:0 causes a 2:1 reduction of chrominance information. While FIGS. 4 and 5 only show a simplified version of color subsampling, actual implementations use more than two components in the neighborhood to calculate a new component, the number depending on the specifications of each coding device. The aforementioned top-field chrominance component a3, for example, may actually be calculated not only from a1 and a2, but also from other surrounding chrominance components. The same is applied to bottom-field chrominance components such as b3.

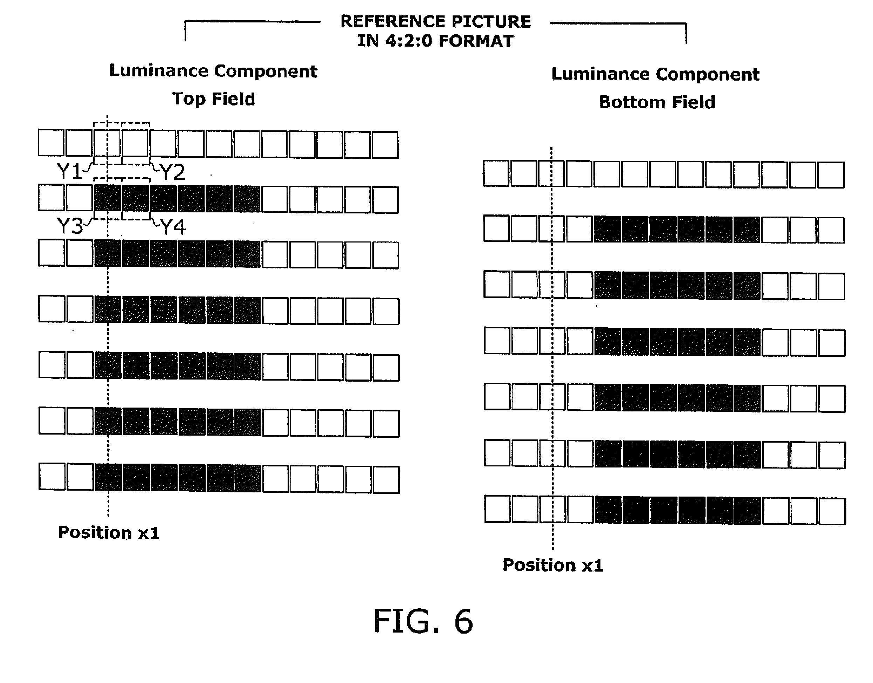

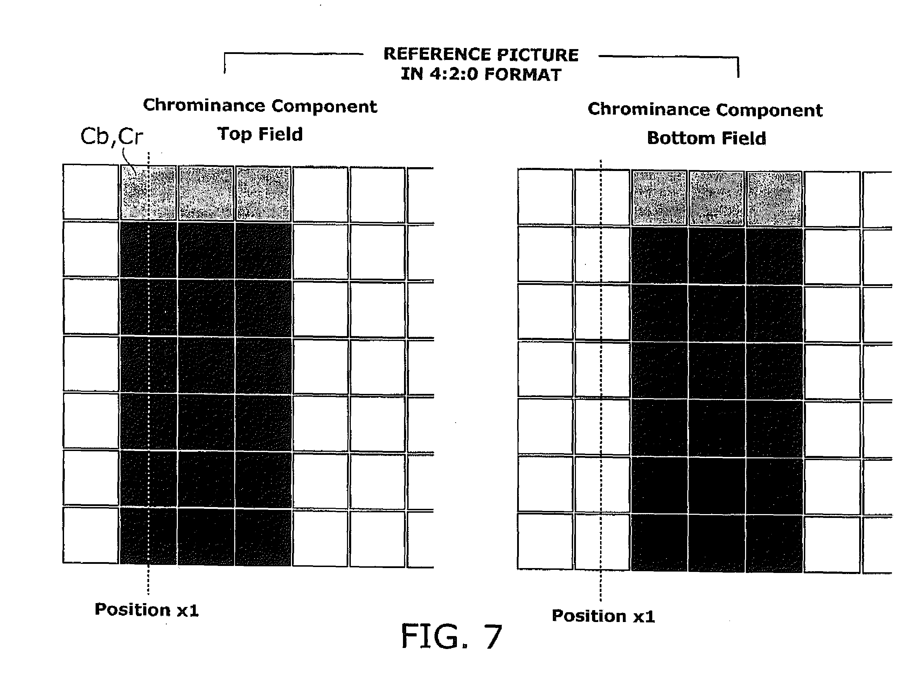

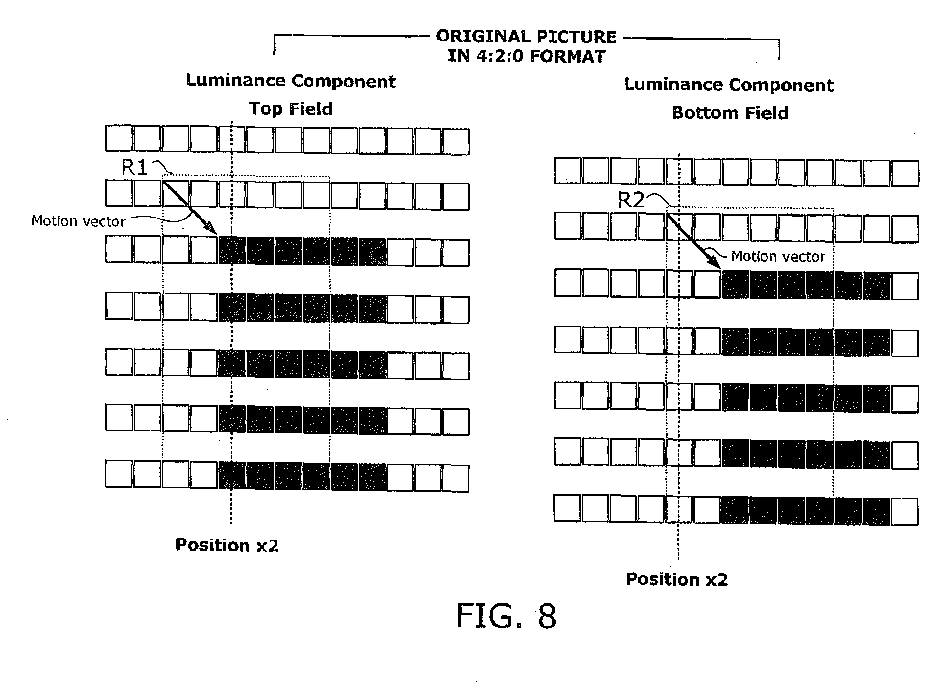

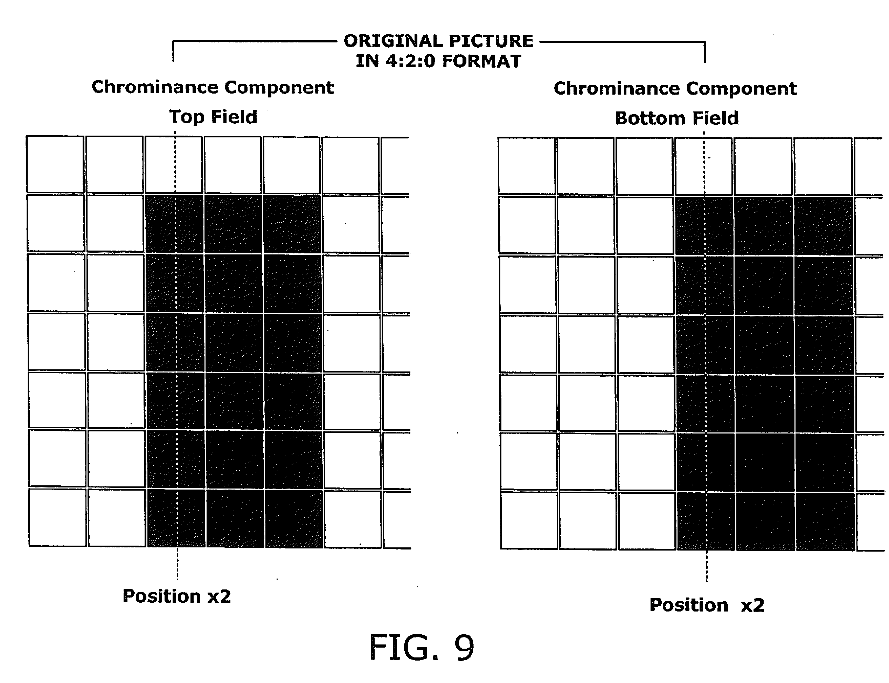

Referring to FIGS. 6 to 9, the moving rectangular object discussed in FIGS. 2 to 5 is now drawn in separate luminance and chrominance pictures in 4:2:0 format. More specifically, FIGS. 6 and 7 show luminance components and chrominance components, respectively, of a 4:2:0 reference picture, while FIGS. 8 and 9 show luminance components and chrominance components, respectively, of a 4:2:0 original picture. All frames are divided into top and bottom fields since the video signal is interlaced.

The 4:2:0 format provides only one color component for every four luminance components in a block of two horizontal pixels by two vertical pixels. For example, four pixels Y1 to Y4 in the top luminance field (FIG. 6) are supposed to share one chrominance component CbCr (which is actually a pair of color-differences Cb and Cr representing one particular color). Since it corresponds to "white" pixels Y1 and Y2 and "black" pixels Y3 and Y4, CbCr is depicted as a "gray" box in FIG. 7 for explanatory purposes.

Area R1 on the left-hand side of FIG. 8 indicates the location of the black rectangle (i.e., moving object) seen in the corresponding top-field reference picture of FIG. 6. Similarly, area R2 on the right-hand side of FIG. 8 indicates the location of the black rectangle seen in the corresponding bottom-field reference picture of FIG. 6. The two arrows are motion vectors in the top and bottom fields. Note that those motion vectors are identical (i.e., the same length and same orientation) in this particular case, and therefore, the present frame prediction yields a motion vector consisting of horizontal and vertical components of +2 pixels and +2 lines, respectively.

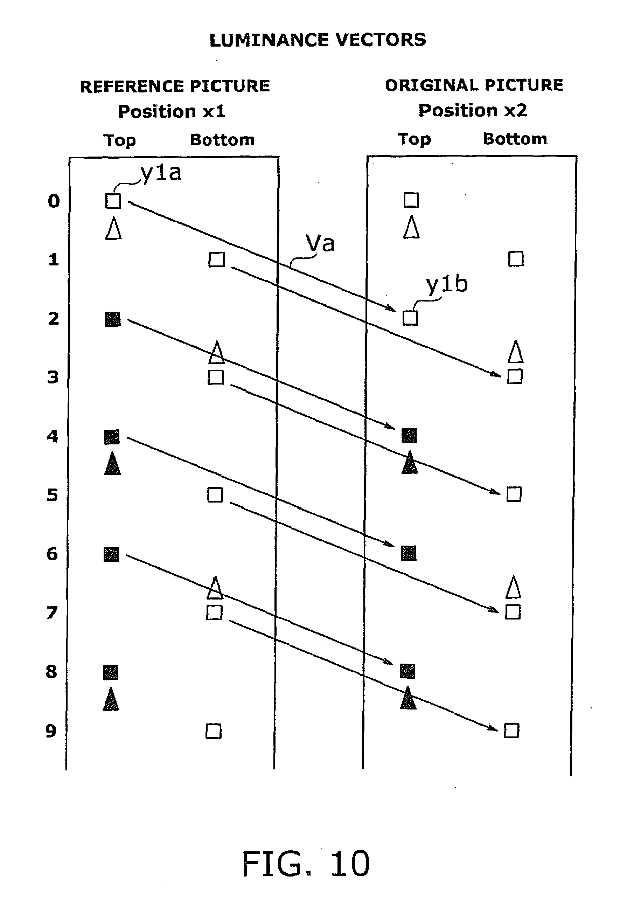

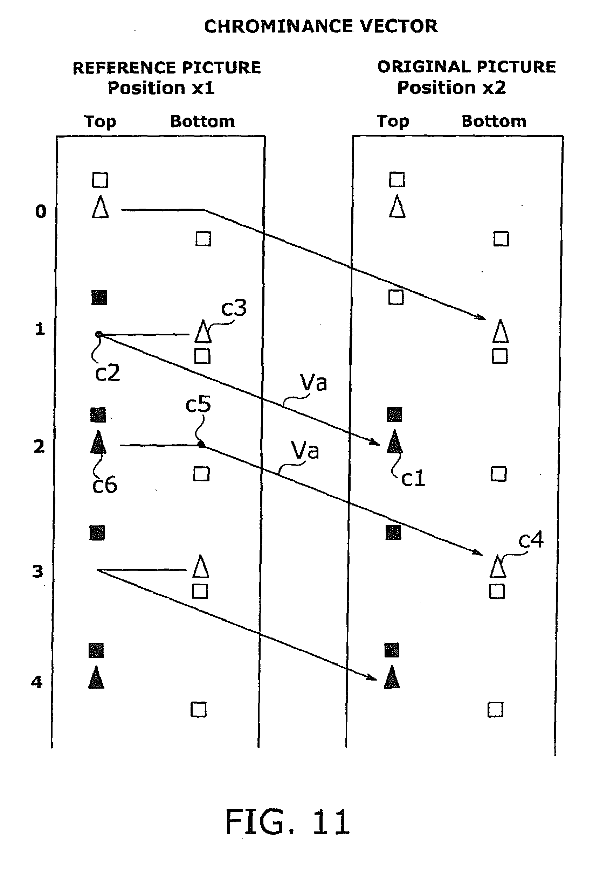

FIGS. 10 and 11 show motion vectors found in the 4:2:0 reference and original pictures explained. More specifically, FIG. 10 gives luminance motion vectors (called "luminance vectors," where appropriate) that indicate pixel-to-pixel associations with respect to horizontal positions x1 of the reference picture (FIG. 6) and x2 of the original picture (FIG. 8). In the same way, FIG. 11 gives chrominance motion vectors (or "chrominance vectors," where appropriate) that indicate pixel-to-pixel associations with respect to horizontal positions x1 of the reference picture (FIG. 7) and x2 of the original picture (FIG. 9).

The notation used in FIGS. 10 and 11 are as follows: White squares and white triangles represent luminance and chrominance components, respectively, in such pixels where no object is present. Black squares and black triangles represent luminance and chrominance components, respectively, in such pixels where the moving rectangular object is present. That is, "white" and "black" symbolize the value of each pixel.

Let Va be a luminance vector obtained in the luminance picture of FIG. 8. Referring to FIG. 10, the luminance vector Va has a vertical component of +2 lines, and the value of each pixel of the reference picture coincides with that of a corresponding pixel located at a distance of two lines in the original picture. Take a pixel y1a in the top-field reference picture, for example, and then look at a corresponding portion of the top-field original picture. Located two lines down from this pixel y1a is a pixel ylb, to which the arrow of motion vector Va is pointing. As far as the luminance components are concerned, every original picture element has a counterpart in the reference picture, and vice versa, no matter what motion vector is calculated. This is because luminance components are not subsampled.

Chrominance components, on the other hand, have been subsampled during the process of converting formats from 4:2:2 to 4:2:0. For this reason, the motion vector calculated from non-subsampled luminance components alone would not work well with chrominance components of pictures. As depicted in FIG. 11, the motion vector Va is unable to directly associate chrominance components of a reference picture with those of an original picture. Take a chrominance component c1 in the top-field original picture, for example. As its symbol (black triangle) implies, this component c1 is part of a moving image of the rectangular object, and according to the motion vector Va, its corresponding chrominance component in the top-field reference picture has to be found at c2. However, because of color subsampling, there is no chrominance component at c2. In such a case, the nearest chrominance component c3 at line #1 of the bottom field will be selected for use in motion compensation. The problem is that this alternative component c3 belongs to a "white" region of the picture; i.e., c3 is out of the moving object image. This means that the motion vector Va gives a wrong color estimate, which results in an increased prediction error.

In short, the motion vector Va suggests that c2 would be the best estimate of c1, but c2 does not exist. The conventional method then uses neighboring c3 as an alternative to c2, although it is in a different field. This replacement causes c1 to be predicted by c3, whose chrominance value is far different from c1 since c1 is part of the moving object image, whereas c3 is not. Such a severe mismatch between original pixels and their estimates leads to a large prediction error.

Another example is a chrominance component c4 at line #3 of the bottom-field original picture. While a best estimate of c4 would be located at c5 in the bottom-field reference picture, but there is no chrominance component at that pixel position. Even though c4 is not part of the moving object image, c6 at line #2 of the top-field picture is chosen as an estimate of c4 for use in motion compensation. Since this chrominance component c6 is part of the moving object image, the predicted picture will have a large error.

To summarize the above discussion, video coding devices estimate motion vectors solely from luminance components of given pictures, and the same set of motion vectors are applied also to prediction of chrominance components. The chrominance components, on the other hand, have been subsampled in the preceding 4:2:2 to 4:2:0 format conversion, and in such situations, the use of luminance-based motion vectors leads to incorrect reference to chrominance components in motion-compensated prediction. For example, to predict chrominance components of a top-field original picture, the motion compensator uses a bottom-field reference picture, when it really needs to use a top-field reference picture. For another example, to predict chrominance components of a bottom-field original picture, the motion compensator uses a top-field reference picture, when it really needs to use a bottom-field reference picture. Such chrominance discrepancies confuse the process of motion compensation and thus causes additional prediction errors. The consequence is an increased amount of coded data and degradation of picture quality.

The above problem could be solved by estimating motion vectors independently for luminance components and chrominance components. However, this solution surely requires a significant amount of additional computation, as well as a larger circuit size and heavier processing load.

Further Analysis of Chrominance Discrepancies

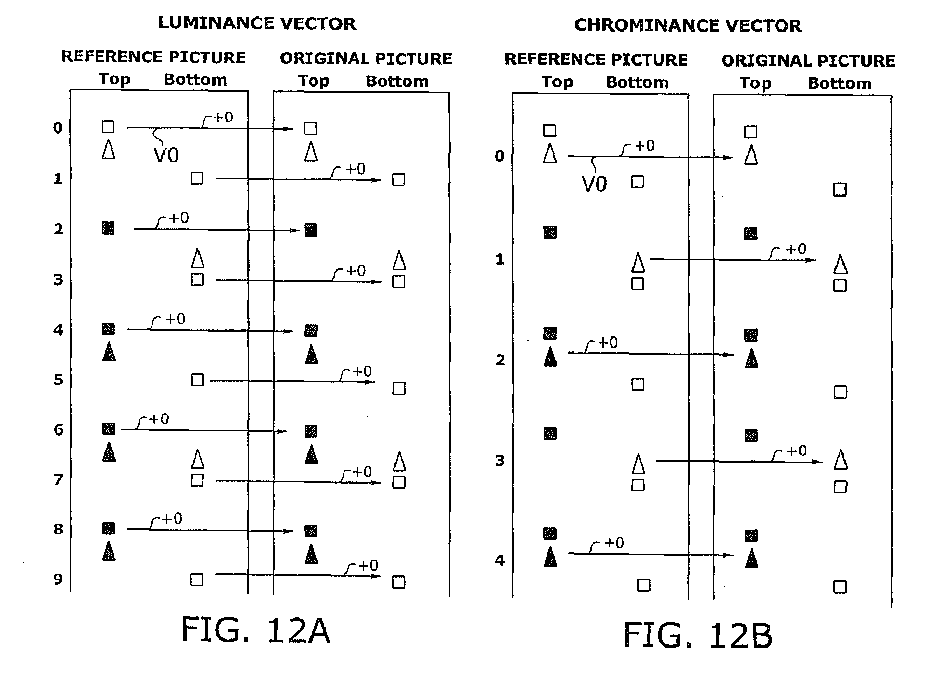

This section describes the problem of chrominance discrepancies in a more generalized way. FIGS. 12A to 16B show several different patterns of luminance motion vectors, assuming different amounts of movement that the aforementioned rectangular object would make.

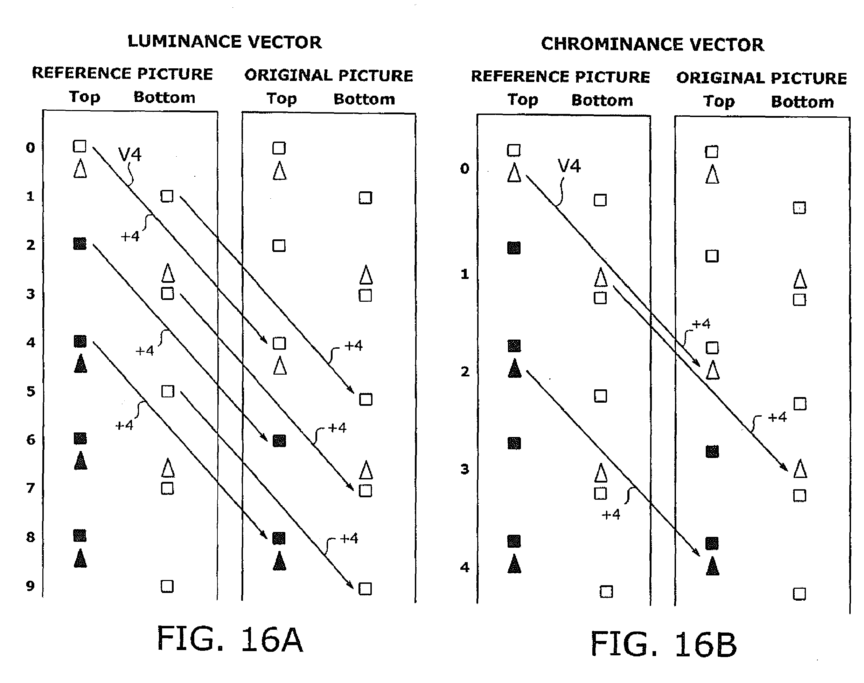

Referring first to FIGS. 12A and 12B, the rectangular object has moved purely in the horizontal direction, and thus the resulting motion vector V0 has no vertical component. Referring to FIGS. 16A and 16B, the object has moved a distance of four lines in the vertical direction, resulting in a motion vector V4 with a vertical component of +4. In these two cases, the luminance vectors V0 and V4 can work as chrominance vectors without problem.

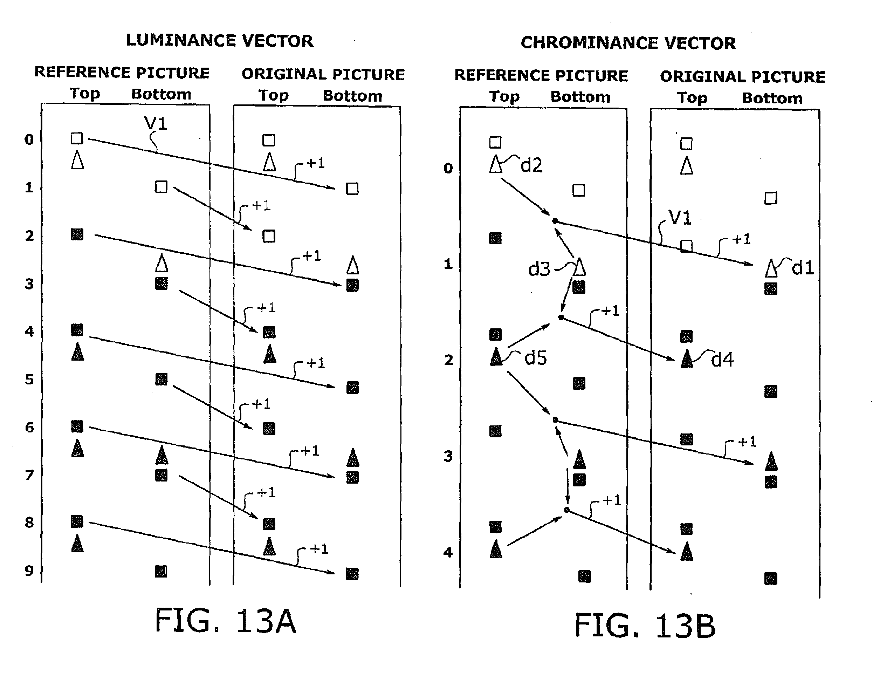

Referring next to FIGS. 13A and 13B, the object has moved vertically a distance of one line, and the resulting motion vector V1 has a vertical component of +1. This luminance vector V1 is unable to serve as a chrominance vector. Since no chrominance components reside in the pixels specified by the motion vector V1, the chrominance of each such pixel is calculated by half-pel interpolation. Take a chrominance component d1, for example. Since the luminance vector V1 fails to designate an existing chrominance component in the reference picture, a new component has to be calculated as a weighted average of neighboring chrominance components d2 and d3. Another example is a chrominance component d4. Since the reference pixel that is supposed to provide an estimate of d4 contains no chrominance component, a new component has to be interpolated from neighboring components d3 and d5.

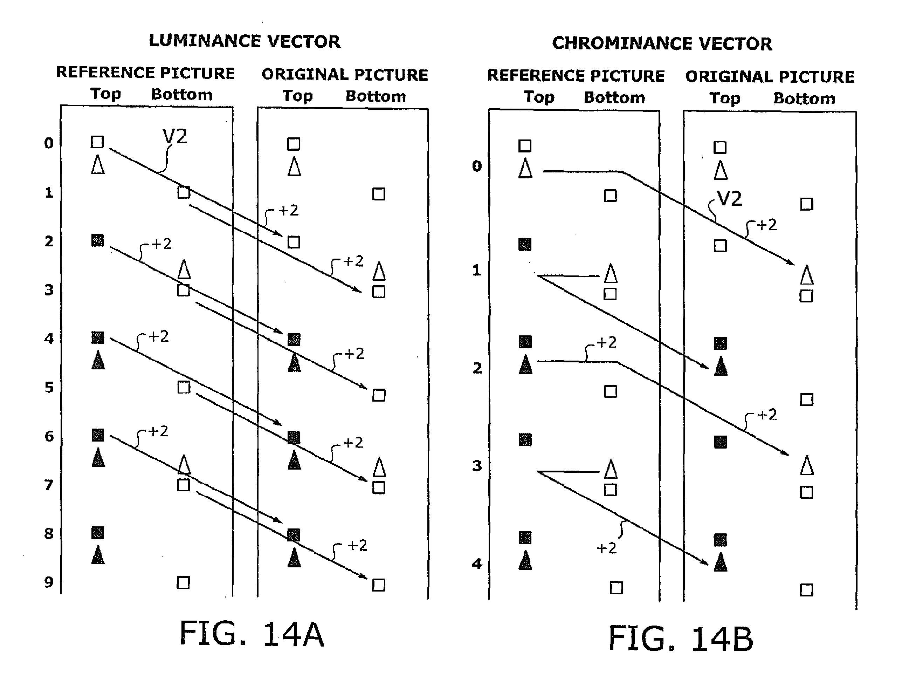

Referring to FIG. 14, the object has moved vertically a distance of two lines, resulting in a motion vector V2 with a vertical component of +2. This condition produces the same situation as what has been discussed above in FIGS. 10 and 11. Using the luminance vector V2 as a chrominance vector, the coder would mistakenly estimate pixels outside the object edge with values of inside pixels.

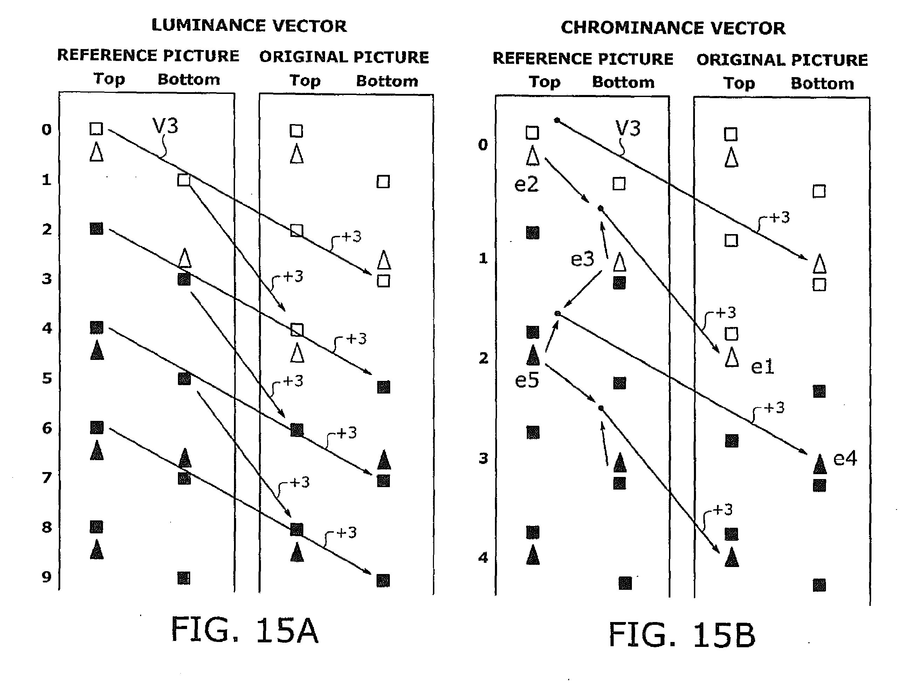

Referring to FIG. 15, the object has moved vertically a distance of three lines, resulting in a motion vector V3 with a vertical component of +3. This condition produces the same situation as what has been discussed in FIGS. 13A and 13B. That is, no chrominance components reside in the pixels specified by the motion vector V3. Half-pel interpolation is required to produce a predicted picture. Take a chrominance component e1, for example. Since the luminance vector V3 fails to designate an existing chrominance component in the reference picture, a new component has to be calculated as a weighted average of neighboring chrominance components e2 and e3. Another similar example is a chrominance component e4. Since the reference pixel that is supposed to provide an estimate of e1 has no assigned chrominance component, a new component has to be interpolated from neighboring components e3 and e5.

To summarize the above results, there is no discrepancy when the motion vector has a vertical component of zero, whereas a discrepancy happens when the vertical component is +1, +2, or +3. When it is +4, another no-discrepancy situation comes again. In other words, there is no mismatch when the vertical component is 4n+0, while there is a mismatch when it is 4n+1, 4n+2, or 4n+3, where n is an integer.

The most severe discrepancy and a consequent increase in prediction error could occur when the vertical component is 4n+2, in which case the video coding device mistakenly estimates pixels along a vertical edge of a moving object. In the case of 4n+1 and 4n+3, half-pel interpolation between top field and bottom field is required. While the severity of error is smaller than the case of 4n+2, the amount of prediction error would increase to some extent.

As mentioned earlier, the Japanese Patent Application Publication No. 2001-238228 discloses a technique of reducing prediction error by simply rejecting motion vectors with a vertical component of 4n+2. This technique, however, does not help the case of 4n+1 or 4n+3. For better quality of coded pictures, it is therefore necessary to devise a more comprehensive method that copes with all different patterns of vertical motions.

With an ideal communication channel, coded pictures can be reproduced correctly at the receiving end, no matter how large or small the prediction error is. In this sense, an increase in prediction error would not be an immediate problem in itself, as long as the video transmission system offers sufficiently high bitrates and bandwidths. The existing technique described in the aforementioned patent application simply inhibits motion vectors from having a vertical component of 4n+2, regardless of available transmission bandwidths. Quality of videos may be reduced in such cases.

Taking the above into consideration, a more desirable approach is to deal with candidate vectors having vertical components of 4n+1, 4n+2, and 4n+3 in a more flexible way to suppress the increase of prediction error, rather than simply discarding motion vectors of 4n+2. The present invention thus provides a new motion estimation and compensation device, as well as a video coding device using the same, that can avoid the problem of chrominance discrepancies effectively, without increasing too much the circuit size or processing load.

Motion Vector Estimation

This section provides more details about the motion estimation and compensation device 10 according to a first embodiment of the invention, and particularly about the operation of its motion vector estimator 11.

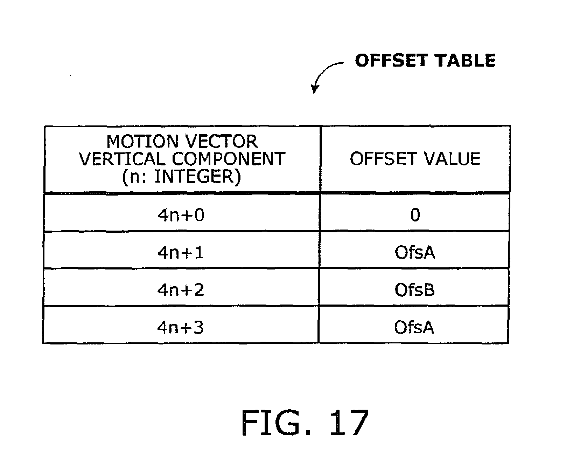

FIG. 17 shows an offset table. This table defines how much offset is to be added to the SAD of candidate blocks, for several different patterns of motion vector components. Specifically, the motion vector estimator 11 gives no particular offset when the vertical component of a motion vector is 4n+0, since no chrominance discrepancy occurs in this case. When the motion vector has a vertical component is 4n+1, 4n+2, or 4n+3, there will be a risk of chrominance discrepancies. Since the severity in the case of 4n+2 is supposed to be much larger than the other two cases, the offset table of FIG. 17 assigns a special offset value OfsB to 4n+2 and a common offset value OfsA to 4n+1 and 4n+3.

The motion vector estimator 11 determines those offset values OfsA and OfsB in an adaptive manner, taking into consideration the following factors: transmission bitrates, quantization parameters, chrominance edge condition, and prediction error of chrominance components. The values of OfsA and OfsB are to be adjusted basically in accordance with quantization parameters, or optionally considering transmission bitrates and picture color condition.

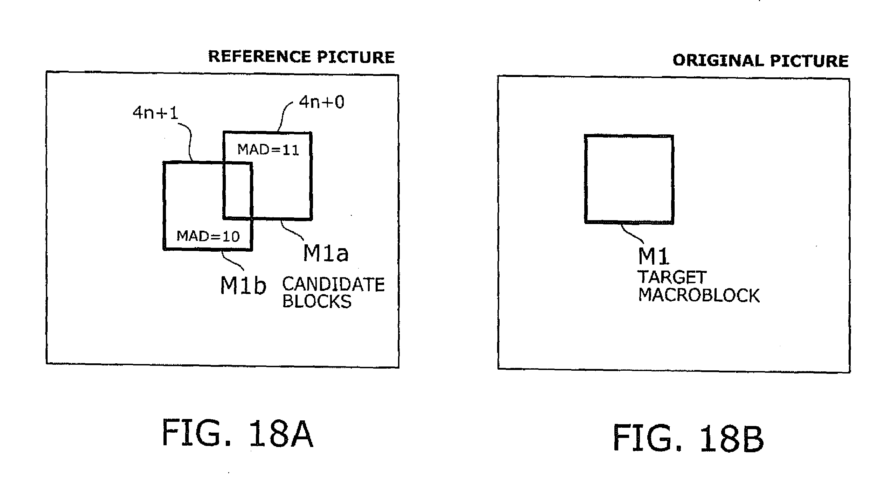

FIGS. 18A to 19B show how to determine an offset from transmission bitrates or chrominance edge condition. Those diagrams illustrate such situations where the motion vector estimator 11 is searching a reference picture to find a block that gives a best estimate for a target macroblock M1 in a given original picture.

Referring to FIGS. 18A and 18B, it is assumed that candidate blocks M1a and M1b in a reference picture have mean absolute difference (MAD) values of 11 and 10, respectively, with respect to a target macroblock M1 in an original picture. Mean absolute difference (MAD) is equivalent to an SAD divided by the number of pixels in a block, which is 256 in the present example. M1a is located at a vertical distance of 4n+0, and M1b at a vertical distance of 4n+1, both relative to the target macrablock M1.

Either of the two candidate blocks M1a and M1b is to be selected as a predicted block of the target macroblock M1, depending on which one has a smaller SAD with respect to M1. In low-bitrate environments, a sharp chrominance edge, if present, would cause a chrominance discrepancy, and a consequent prediction error could end up with a distorted picture due to the effect of quantization. Taking this into consideration, the motion vector estimator 11 gives an appropriate offset OfsA so that M1a at 4n+0 will be more likely to be chosen as a predicted block even if the SAD between M1 and Mb1 is somewhat smaller than that between M1 and M1a.

Suppose now that OfsA is set to, for example, 257. Since the offset is zero for M1a located at 4n+0, the SAD values of M1a and M1b are calculated as follows:

$$SAD(M1a) = MAD(M1a) \times 256 + 0$$
$$= 11 \times 256$$
$$= 2816$$

$$SAD(M1b) = MAD(M1b) \times 256 + OfsA$$

$$= 10 \times 256 + 257$$

$$= 2817$$

where SAD () and MAD () represent the sub of absolute differences of a block and the mean absolute difference of a blocks, respectively. Since the result indicates SAD(M1a)<SAD(M1b) (i.e., 2816<2817), the first candidate block M1a at 4n+0 is selected as a predicted block, in spite of the fact that SAD of M1b is actually smaller than that of H1a, before they are biased by the offsets. This result is attributed to offset OfsA, which has been added to SAD of M1b beforehand in order to increase the probability of selecting the other block M1a.

Blocks at 4n+0 are generally preferable to blocks at 4n+1 under circumstances where the transmission bitrate is low, and where the pictures being coded have a sharp change in chrominance components. When the difference between a good candidate block at 4n+0 and an even better block at 4n+1 (or 4n+3) is no more than one in terms of their mean absolute difference values, choosing the second best block would impose no significant degradation in the quality of luminance components. The motion vector estimator 11 therefore sets an offset OfsA so as to choose that block at 4n+0, rather than the best block at 4n+1, which could suffer a chrominance discrepancy.

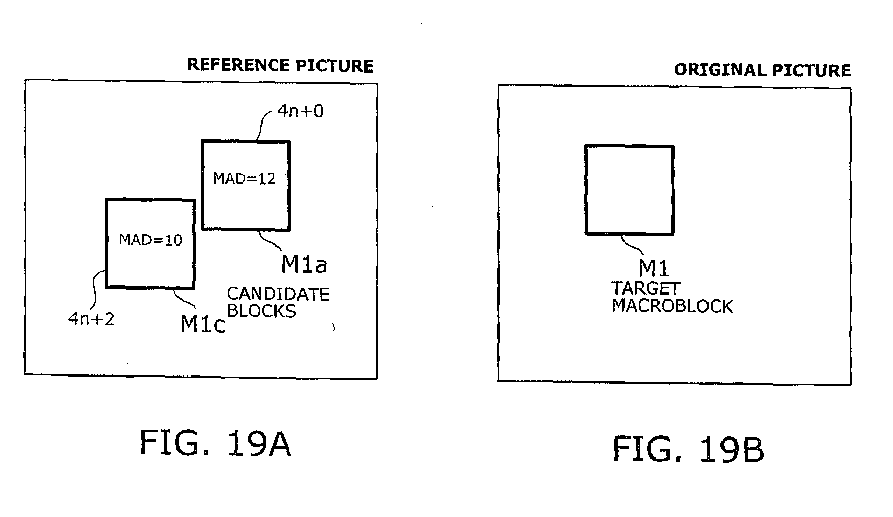

FIGS. 19A and 19B show a similar situation, in which a candidate macroblock M1a has an MAD value of 12, and another candidate block M1c has an MAD value of 10, both with respect to a target block M1 in an original picture. M1a is located at a vertical distance of 4n+0, and M1c at a vertical distance of 4n+2, both relative to the target block M1.

Suppose now that OfsB is set to, for example, 513. Then SAD between M1 and M1c and SAD between M1 and M1a are calculated as follows:

$$SAD(M1c) = MAD(M1c) \times 256 + OfsB$$

$$= 10 \times 256 + 513$$

$$= 3073$$

$$SAD(M1a) = MAD(M1a) \times 256 + 0$$

$$= 12 \times 256$$

$$= 3072$$

Since the result indicates SAD (M1a) <SAD (M1c) (i.e., 3072<3073), the candidate block M1a at 4n+0 is selected as a predicted block, despite the fact that the SAD value of M1c at 4n+2 is actually smaller than that of M1a at 4n+0, before they are biased by the offsets. This result is attributed to the offset OfsB, which has been added to SAD of M1c beforehand in order to increase the probability of selecting the other block M1a.

Blocks at 4n+0 are generally preferable to blocks at 4n+2 under circumstances where the transmission bitrate is low, and the pictures being coded have a sharp change in chrominance components. When the difference between a good candidate block at 4n+0 and an even better block at 4n+2 is no more than two in terms of their mean pixel values, choosing the second best block at 4n+0 would impose no significant degradation in the quality of luminance components. The motion vector estimator 11 therefore sets an offset OfsB so as to choose that block at 4n+0, rather than the best block at 4n+2, which could suffer a chrominance discrepancy.

High-bitrate environments, unlike the above two examples, permit coded video data containing large prediction error to be delivered intact to the receiving end. In such a case, relatively small offsets (e.g., OfsA=32, OfsB=64) are provided for blocks at 4n+1, 4n+2, and 4n+3, thus lowering the probability of selecting a block at 4n+0 (i.e., motion vector with a vertical component of 4n+0).

Motion Estimation Program

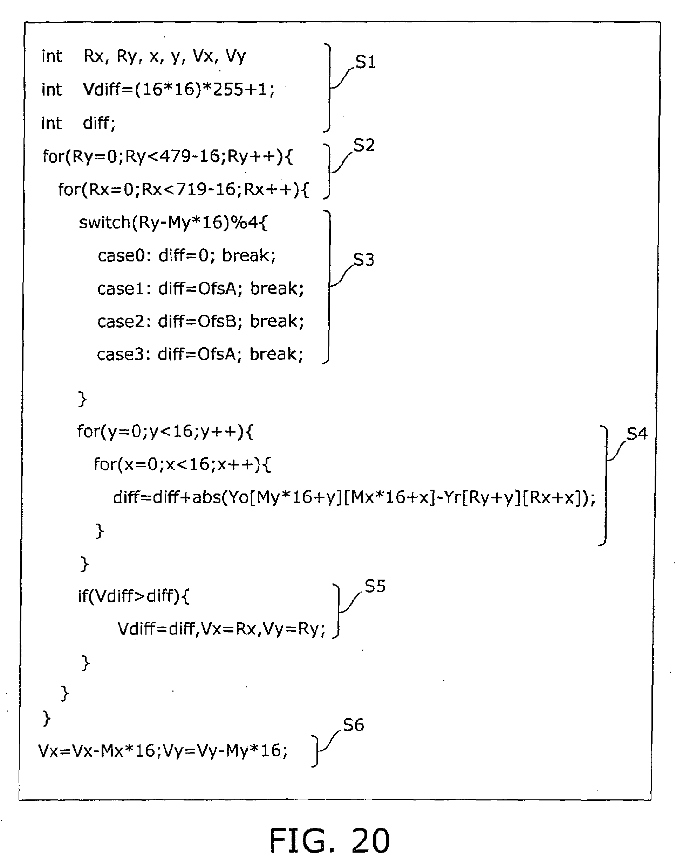

This section describes a more specific program for estimating motion vectors. FIG. 20 shows an example program code for motion vector estimation, which assumes a video image size of 720 pixels by 480 lines used in ordinary TV broadcasting systems. Pictures are stored in a frame memory in 4:2:0 format, meaning that one frame contains 720x480 luminance samples and 360x240 chrominance samples.

Let Yo[y][x] be individual luminance components of an original picture, and Yr[y][x] those of a reference picture, where x=0 to 719, y=0 to 479, and each such component takes a value in a range of 0 to 255. Also, let Vx and Vy be the components of a motion vector found in frame prediction mode as having a minimum SAD value with respect to a particular macroblock at macroblock coordinates (Mx, My) in the given original picture. Vx and Vy are obtained from, for example, a program shown in FIG. 20, where Mx is 0 to 44, My is 0 to 29, and function abs(v) gives the absolute value of v. The program code of FIG. 20 has the following steps:

(S1) This step is a collection of declaration statements. Variables Rx and Ry are declared to represent a horizontal and vertical positions of a pixel in a reference picture, respectively. Variables x and y represent a horizontal and vertical positions of a pixel in an original picture. As already mentioned, Vx and Vy are a horizontal and vertical components of a motion vector. The second statement gives Vdiff an initial value that is large enough to exceed every possible SAD value. Specifically, it is set to 16x16x255+1, in consideration of an extreme case where every pair of pixels shows a maximum difference of 255. The third statement declares diff for holding calculation results of SAD with offset.

(S2) The first "for" statement increases Ry from zero to (479-15) by an increment of +1, while the second "for" statement in an inner loop increases Rx from zero to (719-15) by an increment of +1.

(S3) The first line subtracts My×16 (y-axis coordinate of target block) from Ry (y-axis coordinate of candidate block) and divides the result by four. If the remainder is zero, then diff is cleared. If the remainder is one, then diff is set to OfsA. If the remainder is two, then diff is set to OfsB. If the remainder is three, then diff is set to OfsA. Note that diff gains a specific offset at this step.

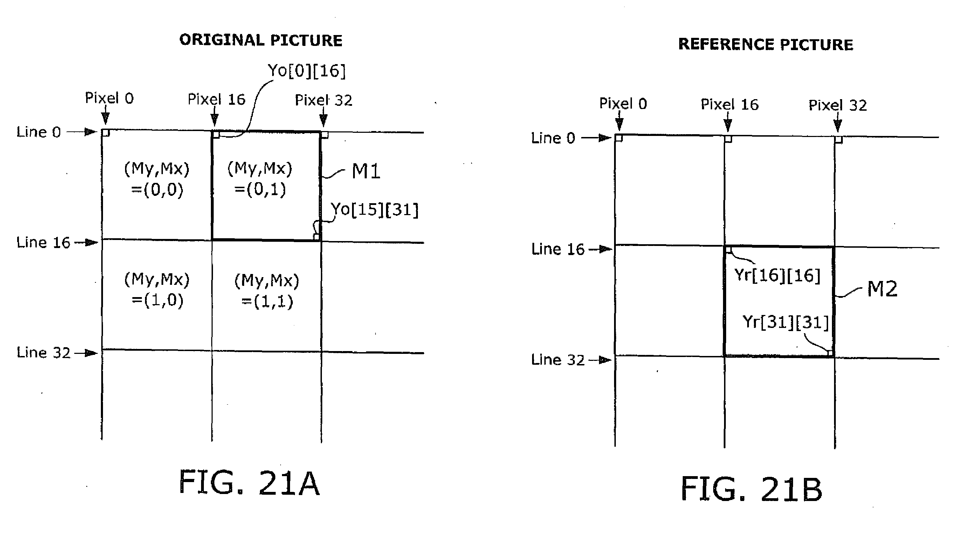

(S4) Another two "for" statements increase y from zero to 15 by an increment of +1 and, in an inner loop, x from zero to 15 by an increment of +1. Those nested loops calculate an SAD between the target macroblock in the original picture and a candidate block in the reference picture (as will be described later in FIGS. 21A and 21B).

(S5) Vdiff (previously calculated SAD) is compared with diff (newly calculated SAD). If Vdiff>diff, then Vdiff is replaced with diff. Also, the pixel coordinates Rx and Ry at this time are transferred to Vx and Vy. This step S5 actually tests and updates the minimum SAD.

(S6) Finally Vx and Vy are rewritten as vector components; that is, Vx is replaced with Vx-Mx×16, and Vy is replaced with Vy-My×16.

FIGS. 21A and 21B show a process of searching for pixels in calculating an SAD. As seen in step S4 in the program of FIG. 20, Yo[My*16+y][Mx*16+x] represents a pixel in the original picture, and Yr[Ry+y][Rx+x] a pixel in the reference picture. Think of obtaining an SAD between a macroblock M1 in the original picture and a block M2 in the reference picture. Since the macroblock M1 is at macroblock coordinates (My, Mx)=(0, 1), a pixel inside M1 is expressed as:

$$\texttt{Yo[My*16+y][Mx*16+x]} = \texttt{Yo[0*16+y][1*16+x]}$$

$$= \texttt{Yo[y][16+x]}$$

Since the reference picture block M2 begins at line #16, pixel #16, a pixel inside M2 is expressed as:

$$\texttt{Yr[Ry+y][Rx+x]} = \texttt{Yr[16+y][16+x]}$$

By varying x and y in the range of zero to 15, the code in step S4 compares all pixel pairs within the blocks M1 and M2, thereby yielding an SAD value for M1 and M2. For x=0 and y=0, for example, an absolute difference between Yo[y][16+x]=Yo[0][16] (pixel at the top-left corner of M1) and Yr[16][16] (corresponding pixel in M2) is calculated at step S4. Take x=15 and y=15 for another example. Then an absolute difference between Yo[y][16+x]=Yo[15][31] (pixel at the bottom-right corner of M1) and Yr[31][31] (corresponding pixel in M2) is calculated at step S4. This kind of calculation is repeated 256 times before an SAD value is determined.

Step S3 is what is added according to the present invention, while the other steps of the program are also found in conventional motion vector estimation processes. As can be seen from the above example, the processing functions proposed in the present invention are realized as a program for setting a different offset depending on the vertical component of a candidate motion vector, along with a circuit designed to support that processing. With such a small additional circuit and program code, the present invention effectively avoids the problem of chrominance discrepancies, which may otherwise be encountered in the process of motion vector estimation.

Luminance Errors

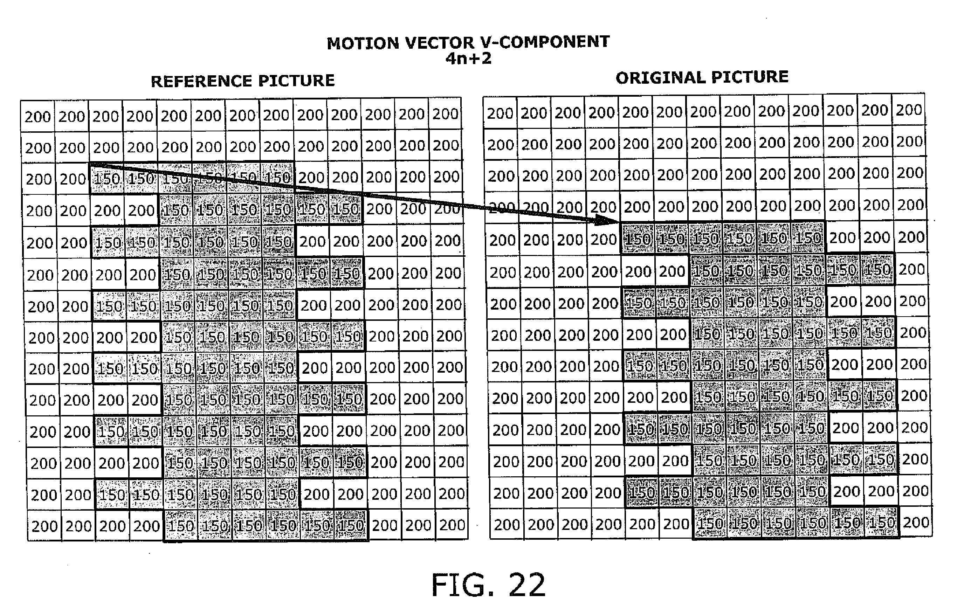

Referring now to FIGS. 22 to 35, we will discuss again the situation explained earlier in FIGS. 2 and 3. That is, think of a sequence of video pictures on which a dark, rectangular object image is moving in the direction from top left to bottom right. Each frame of pictures is composed of a top field and a bottom field. It is assumed that the luminance values are 200 for the background and 150 for the object image, in both reference and original pictures. The following will present various patterns of motion vector components and resulting difference pictures. The term "difference picture" refers to a picture representing differences between a given original picture and a predicted picture created by moving pixels in accordance with estimated motion vectors.

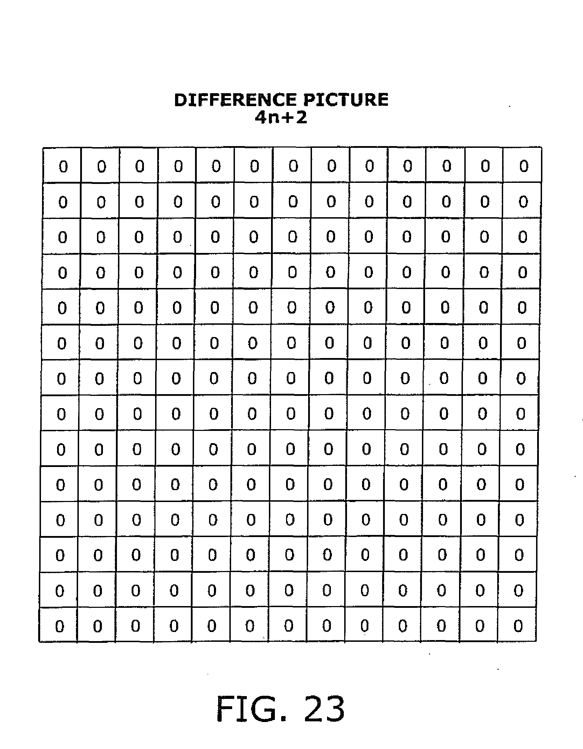

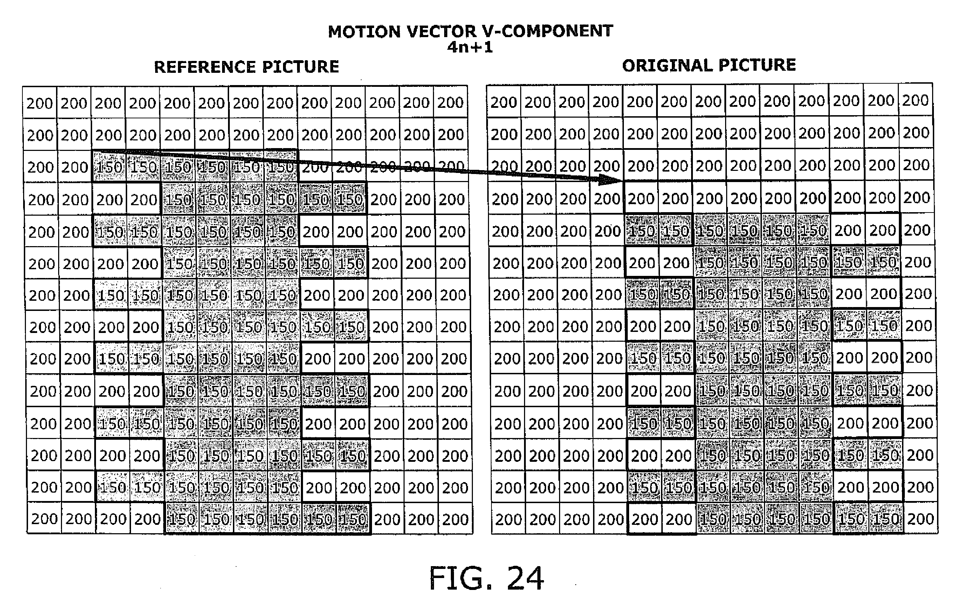

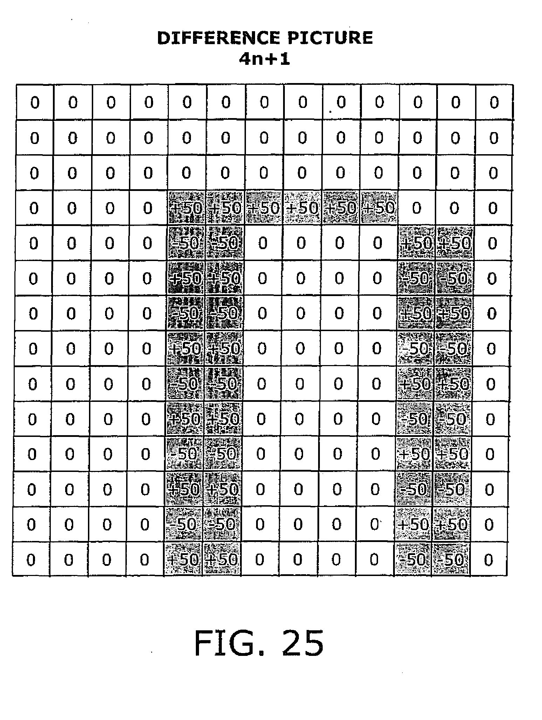

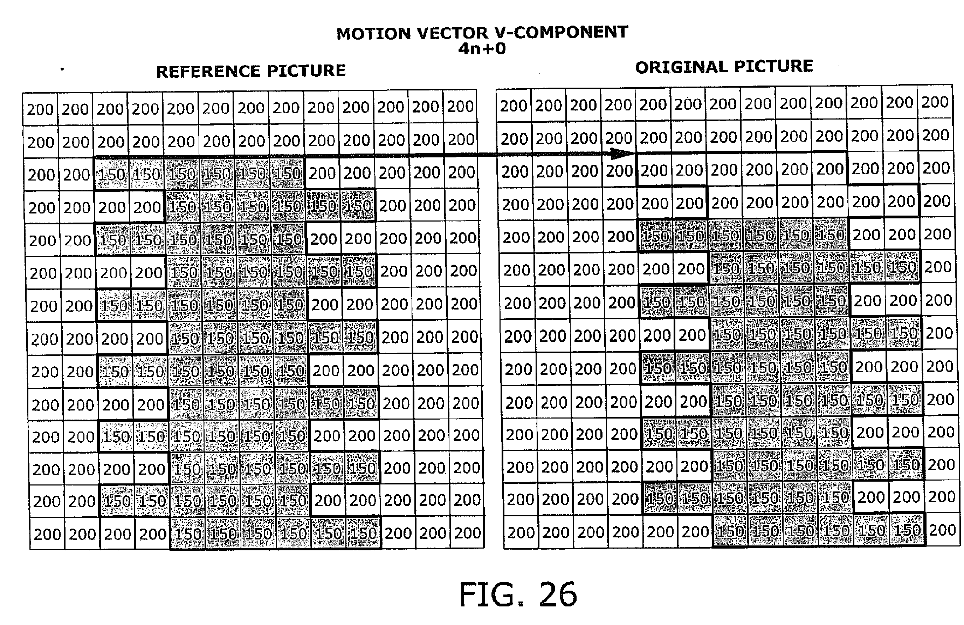

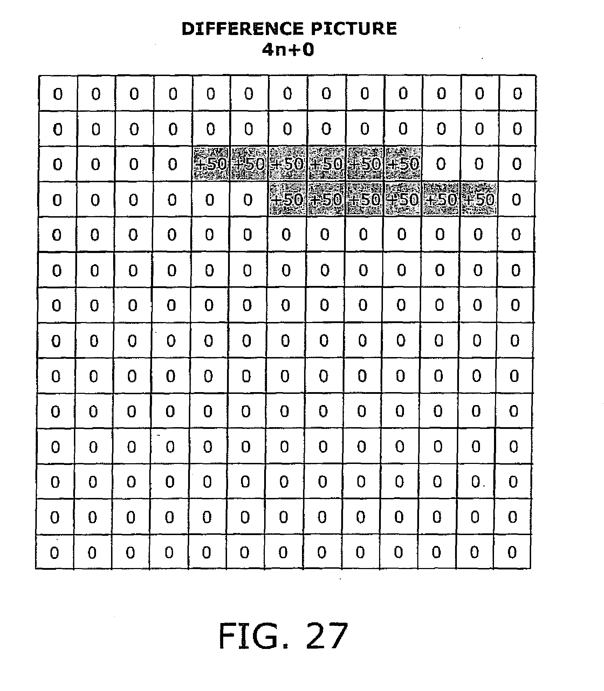

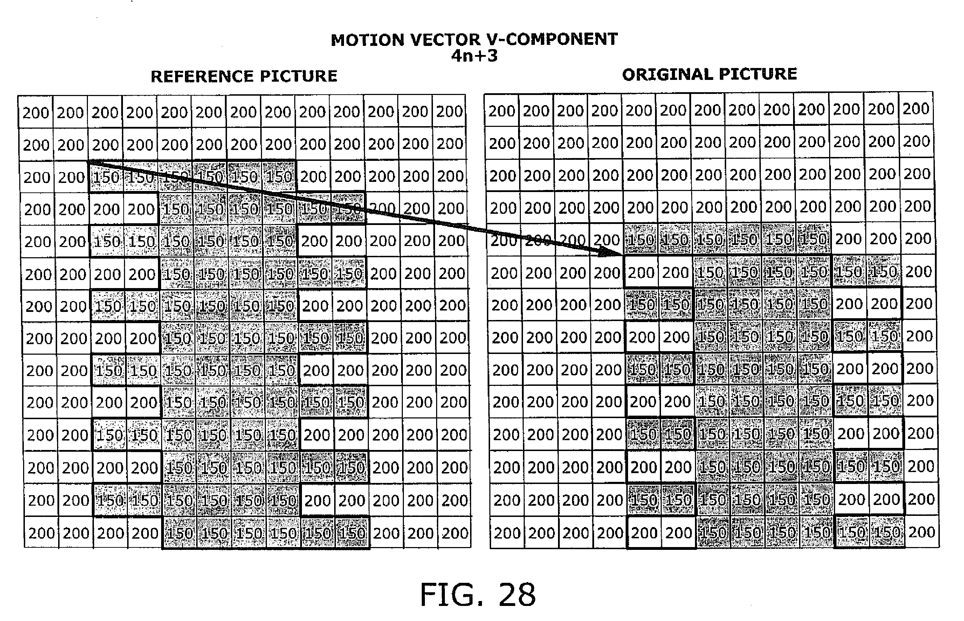

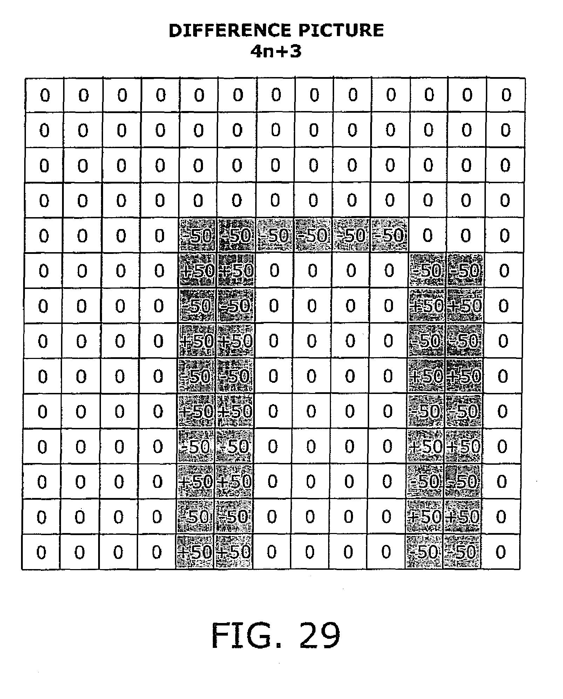

FIG. 22 shows a reference and original pictures when the motion vector has a vertical component of 4n+2, and FIG. 23 shows a resulting difference picture. FIG. 24 shows a reference and original pictures when the motion vector has a vertical component of 4n+1, and FIG. 25 shows a resulting difference picture. FIG. 26 shows a reference and original pictures when the motion vector has a vertical component of 4n+0, and FIG. 27 shows a resulting difference picture. FIG. 28 shows a reference picture and an original picture when the motion vector has a vertical component of 4n+3, and FIG. 29 shows a resulting difference picture. All those pictures are shown in an interlaced format, i.e., as a combination of a top field and a bottom field.

Referring now to FIG. 22, the motion vector agrees with the object motion, which is +2. This allows shifted reference picture elements to coincide well with the original picture. The difference picture of FIG. 23 thus shows nothing but zero-error components, and the resulting SAD value is also zero in this condition. The following cases, however, are not free from prediction errors.

Referring to FIG. 24, a motion vector with a vertical component of 4n+1 is illustrated. The resulting SAD value is 2300 (=50x46) as seen from FIG. 25. Referring to FIGS. 26 and 27, an SAD value of 600 (=50×12) is obtained in the case of 4n+0. Referring to FIGS. 28 and 29, an SAD value of 2100 (=50×42) is obtained in the case of 4n+3.

While, in the present example, a conventional system would choose a minimum-SAD motion vector illustrated in FIG. 22, the present invention enables the second best motion vector shown in FIG. 26 to be selected. That is, an offset OfsB of more than 600 makes it possible for the motion vector with a vertical component of 4n+0 (FIG. 26) to be chosen, instead of the minimum-SAD motion vector with a vertical component of 4n+2.

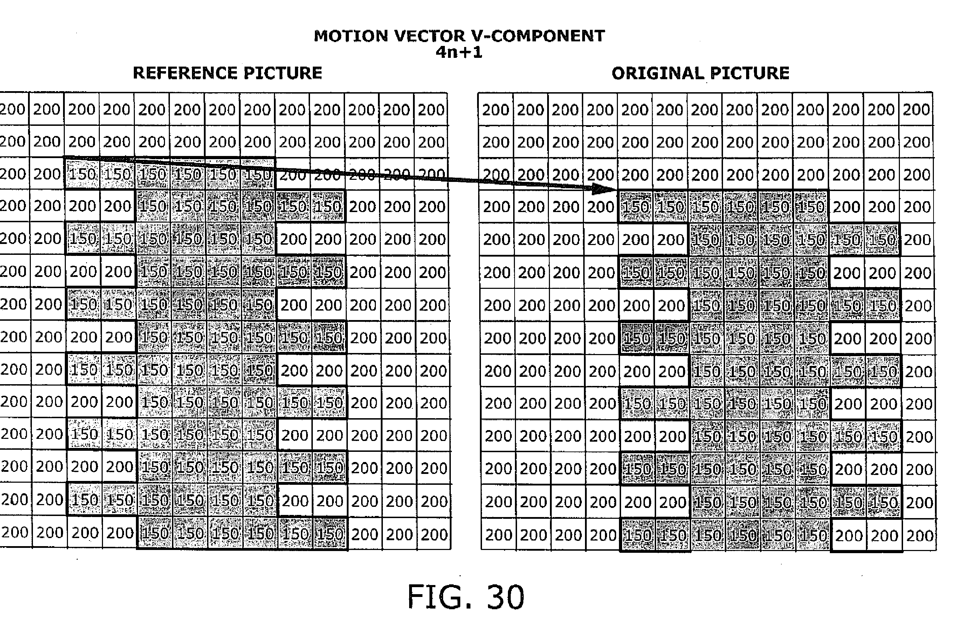

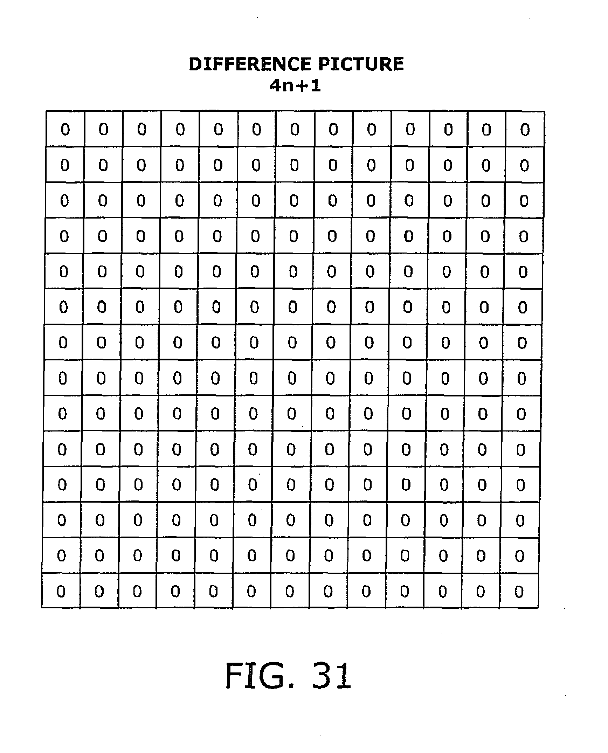

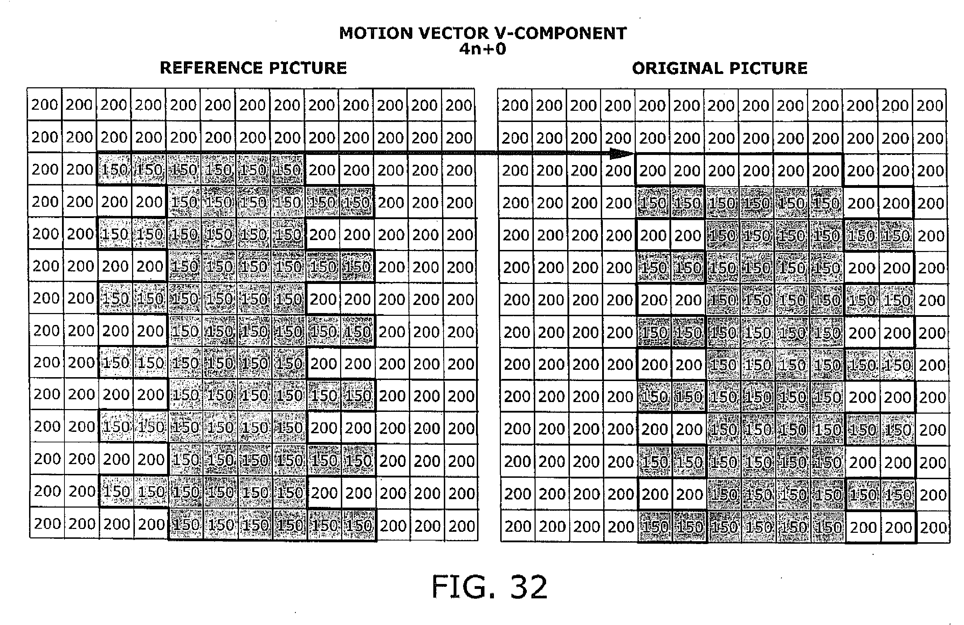

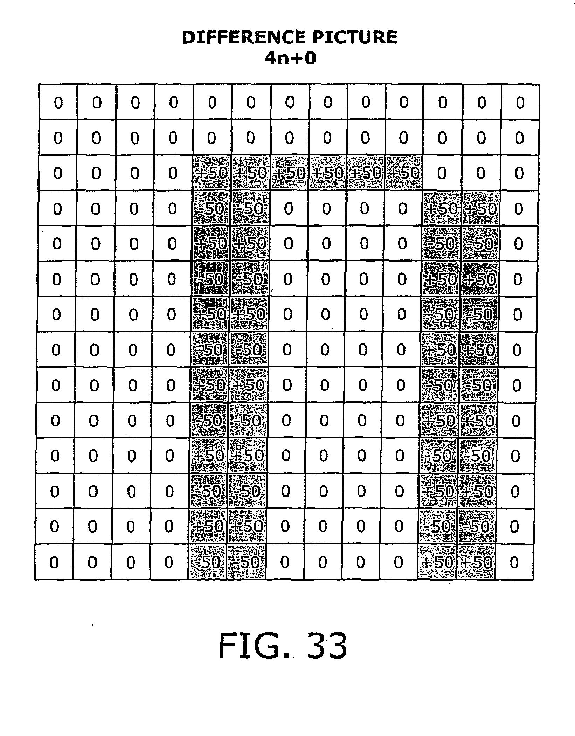

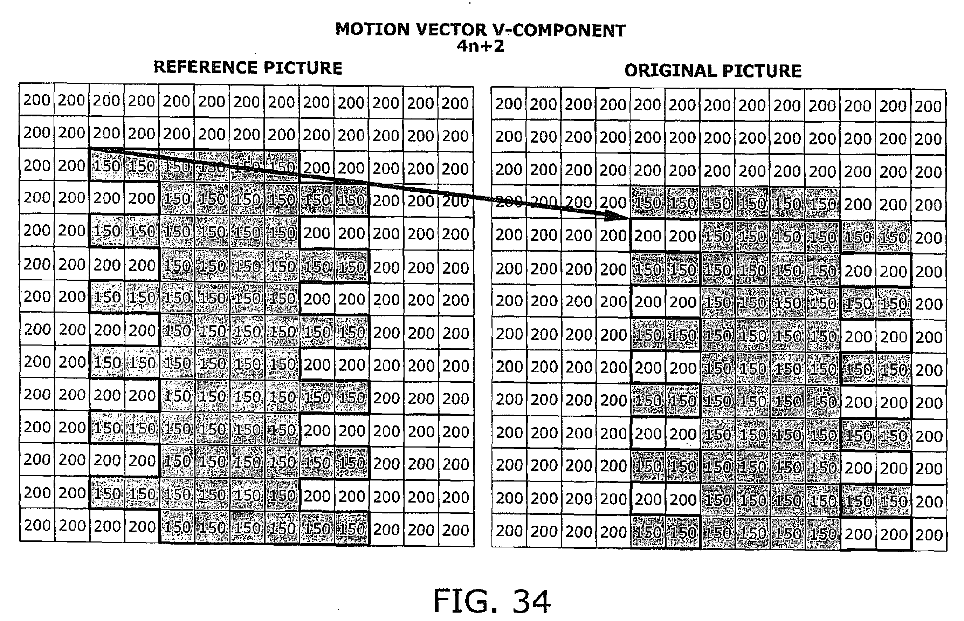

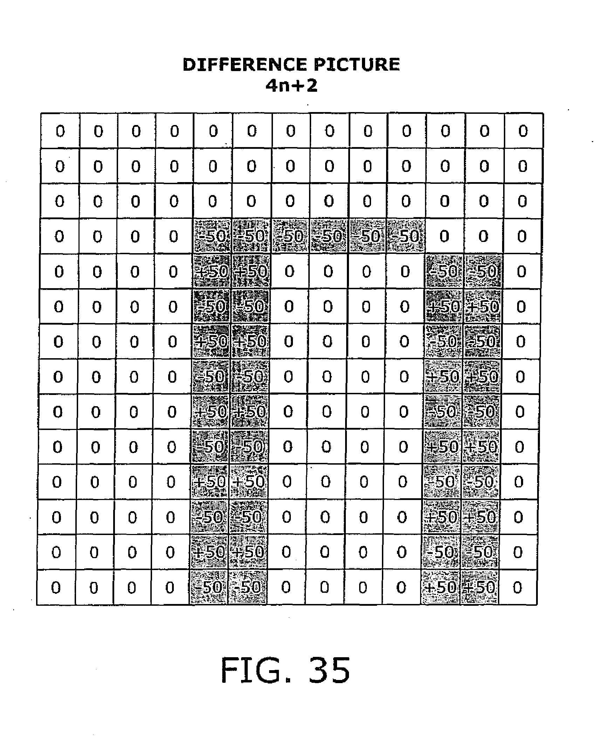

The following is another set of examples, in which the rectangular object has moved only one pixel distance in the vertical direction. FIG. 30 shows a reference picture and an original picture when the motion vector has a vertical component of 4n+1, and FIG. 31 shows a resulting difference picture. FIG. 32 shows a reference picture and an original picture when the motion vector has a vertical component of 4n+0, and FIG. 33 shows a resulting difference picture. FIG. 34 shows a reference picture and an original picture when the motion vector has a vertical component of 4n+2, and FIG. 35 shows a resulting difference picture.

Referring to FIG. 30, a motion vector with a vertical component of 4n+1 is shown. Since this vector agrees with the actual object movement, its SAD value becomes zero as shown in FIG. 31. Referring to FIGS. 32 and 33, the SAD value is as high as 2500 in the case of 4n+0. Referring to FIGS. 34 and 35, the SAD value is 2300 in the case of 4n+2.

While, in the present example, a conventional system would choose a minimum-SAD motion vector illustrated in FIG. 30, the present invention enables the second best motion vector shown in FIG. 32 to be selected. That is, an offset OfsA of more than 2500 makes it possible for the motion vector with a vertical component of +0 (FIG. 32) to be chosen, instead of the minimum-SAD motion vector with a vertical component of +1.

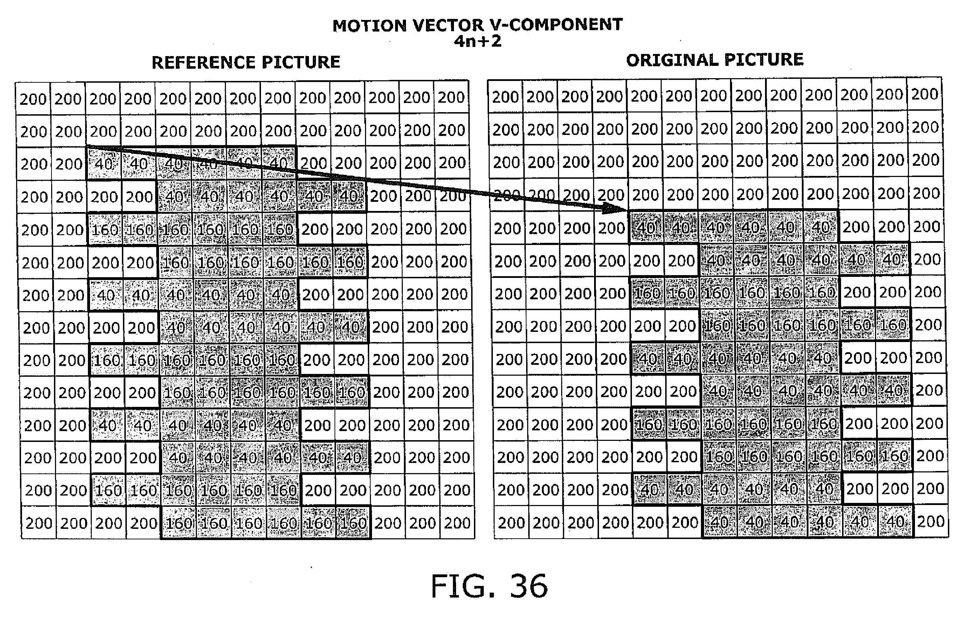

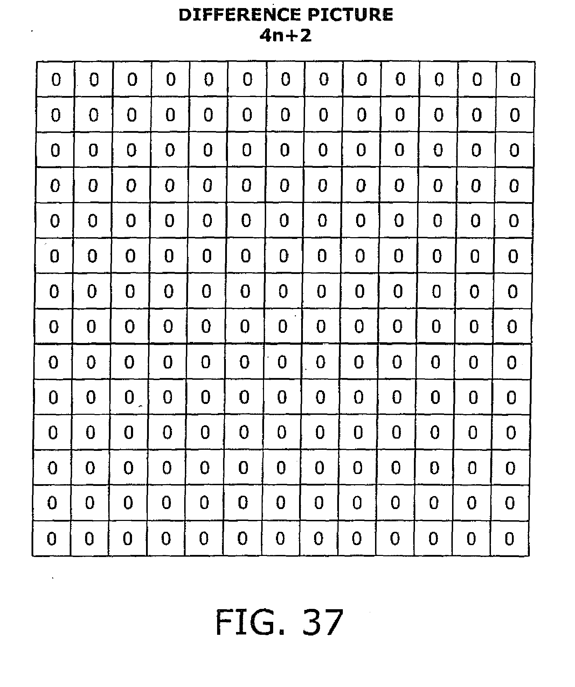

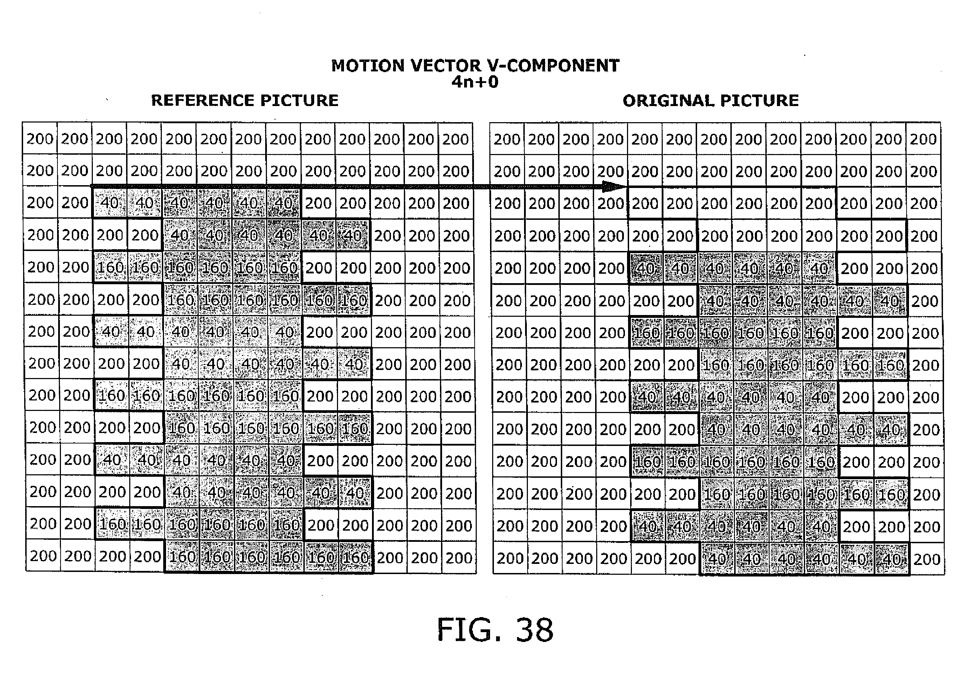

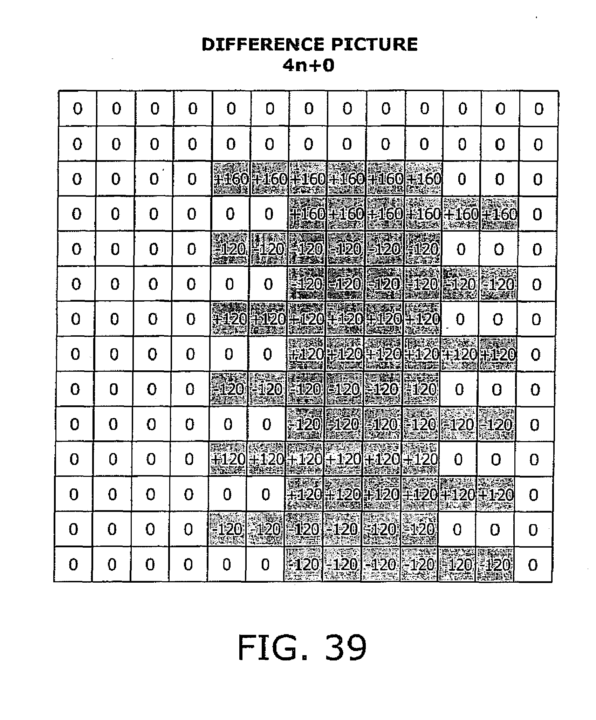

Referring to FIGS. 36 to 39, the following is yet another set of examples, which the rectangular object has non-uniform luminance patterns. FIG. 36 shows a reference picture and an original picture when the motion vector has a vertical component of 4n+2, and FIG. 37 shows a resulting difference picture. FIG. 38 shows a reference picture and an original picture when the motion vector has a vertical component of 4n+0, and FIG. 39 shows a resulting difference picture.

The example of FIG. 36 involves a vertical object movement of +2, as in the foregoing example of FIG. 22, but the rectangular object has non-uniform appearance. Specifically, it has a horizontally striped texture with two different luminance values, 40 and 160. As shown in FIG. 37, the motion vector with a vertical component of +2 yields a difference picture with no errors. When the vertical vector component has a value of 4n+0 as shown in FIGS. 38 and 39, the SAD becomes as large as 9120 (=160×12+120×6×10). Even in this situation, an offset OfsB of 9120 or more would permit the "+0" motion vector to be chosen instead of the above "+2" vector. However, giving such a large offset means allowing any poor candidate block to be chosen. Although chrominance discrepancies can be avoided, the "4n+0" motion vector causes so large a luminance error that the resulting picture will suffer visible deterioration. The "4n+2" vector is, therefore, a better choice for picture quality in such a situation, even though some chrominance discrepancy is expected.

Motion vectors with vertical components of 4n+1, 4n+3, and 4n+2 are prone to produce chrominance discrepancies. Ultimately it may even be possible to eliminate all those vectors by setting OfsA and OfsB to 65280 (=255×256), namely, the theoretical maximum of SAD that chrominance components can take. Since, however, this is not desirable at all when an unreasonably large luminance error is expected, the present invention manages those discrepancy-prone motion vectors by setting adequate OfsA and OfsB to maintain the balance of penalties imposed on the luminance and chrominance.

Offset Based on Chrominance Prediction Error

While SAD offsets OfsA and OfsB may be set to appropriate fixed values that are determined from available bitrates or scene contents, the present invention also proposes to determine those offset values from prediction error of chrominance components in an adaptive manner as will be described in this section. In short, according to the present invention, the motion compensator 12 has an additional function to calculate a sum of absolute differences in chrominance components. This SAD value, referred to by Cdiff, actually includes absolute differences in Cb and those in Cr, which the motion compensator 12 calculates in the course of subtracting a predicted picture from an original picture in the chrominance domain.

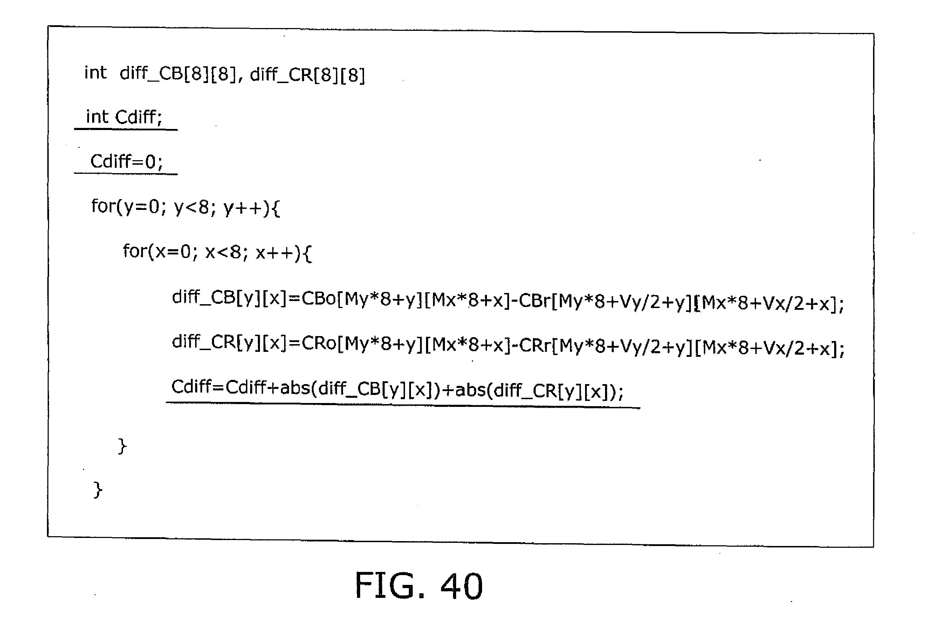

FIG. 40 shows a program for calculating Cdiff. This program is given a set of difference pictures of chrominance, which are among the outcomes of motion-compensated prediction. Specifically diff_CB[][] and diff_CR[][] represent difference pictures of Cb and Cr, respectively. Note that three underlined statements are new steps added to calculate Cdiff, while the other part of the program of FIG. 40 has existed since its original version to calculate differences between a motion-compensated reference picture and an original picture.

The motion compensator 12 also calculates an SAD value of luminance components. Let Vdiff represent this SAD value in a macroblock. While a macroblock contains 256 samples (16x16) of luminance components, the number of chrominance samples in the same block is only 64 (8x8) because of the 4:2:0 color sampling format. Since each chrominance sample consists of a Cb sample and a Cr sample, Cdiff contains the data of 128 samples of Cb and Cr, meaning that the magnitude of Cdiff is about one-half that of Vdiff. After all, under the ideal situation where no chrominance discrepancy is present, the relationship between a luminance SAD value (Vdiff) and a corresponding chrominance SAD value (Cdiff) will be as follows.

$$2 \times \mathtt{Cdiff} - \mathtt{Vdiff} \approx 0 \quad \dots\,(1)$$

This condition (1) holds true in most cases as long as there is no chrominance discrepancy. When the vertical vector component has a value of 4n+1, 4n+3, or 4n+2 and there exits a discrepancy in chrominance, Cdiff becomes larger, and hence $2 \times \mathtt{Cdiff} > \mathtt{Vdiff}$. Taking this fact into consideration, the proposed method gives offsets OfsA and OfsB according to the following formulas (2) and (3).

$$\mathtt{OfsA} = \frac{\sum (2 \times \mathtt{Cdiff(i)} - \mathtt{Vdiff(i)})}{n_A} \quad \dots\,(2)$$

where i is the identifier of a macroblock whose vertical vector component is 4n+1 or 4n+3, and $n_A$ represents the number of such macroblocks.

$$\mathtt{OfsB} = \frac{\sum (2 \times \mathtt{Cdiff(j)} - \mathtt{Vdiff(j)})}{n_B} \quad \dots\,(3)$$

where j is the identifier of a macroblock whose vertical vector component is 4n+2, and $n_B$ represents the number of such macroblocks.

The above proposed method still carries a risk of producing too large OfsA or OfsB to allow vertical vector components of 4n+1, 4n+3, and 4n+2 to be taken, the actual implementation requires some appropriate mechanism to ensure the convergence of OfsA and OfsB by, for example, setting an upper limit for them. Other options are to gradually reduce OfsA and OfsB as the process advances, or returning OfsA and OfsB to their initial values when a large scene change is encountered.

The foregoing formula (1) representing relationship between Cdiff and Vdiff is, in fact, oversimplified for explanatory purposes. The luminance and chrominance have different dynamic ranges, and their balance in a near-monochrome image is quite dissimilar from that in a colorful image. The following formula (4) should therefore be used in the first place.

$$\alpha \times \text{Cdiff} - \text{Vdiff} \approx 0 \quad \ldots \ldots (4)$$

where $\alpha$ is a correction coefficient. While we do not specify any particular method to determine this coefficient since it relates to the characteristics of A/D converters used in the system and many other factors. The following formula (5) is one example method to determine $\alpha$. That is, under the condition of no chrominance discrepancy, the average ratio of Vdiff to Cdiff is calculated over several consecutive frames, and the result is used as the coefficient $\alpha$.

$$\alpha = \frac{\sum (\text{Vdiff}(k) / \text{Cdiff}(k))}{m} \quad \ldots \ldots (5)$$

where m represents the number of such macroblocks, and k is the identifier of a macroblock that satisfies Vdiff(k)<OfsA and Vdiff(k)<OfsB. The conditions about Vdiff are to avoid the effect in the case where vectors are restricted to 4n+0 due to OfsA and OfsB. With the coefficient $\alpha$ calculated in this way, the motion vector estimator determines offset values OfsA and OfsB as follows:

$$\text{OfsA} = \frac{\sum (\alpha \times \text{Cdiff}(i) - \text{Vdiff}(i))}{n_A} \quad \ldots (6)$$

$$\text{OfsB} = \frac{\sum (\alpha \times \text{Cdiff}(j) - \text{Vdiff}(j))}{n_B} \quad \ldots (7)$$

Second Embodiment

This section describes a second embodiment of the present invention. To avoid the problem of chrominance discrepancies, the first embodiment adds appropriate offsets, e.g., OfsA and OfsB, to SAD values corresponding to candidate motion vectors with a vertical component of 4n+1, 4n+3, or 4n+2, thus reducing the chance for those vectors to be picked up as a best match. The second embodiment, on the other hand, takes a different approach to solve the same problem. That is, the second embodiment avoids chrominance discrepancies by adaptively switching between frame prediction mode and field prediction mode, rather than biasing the SAD metric with offsets.

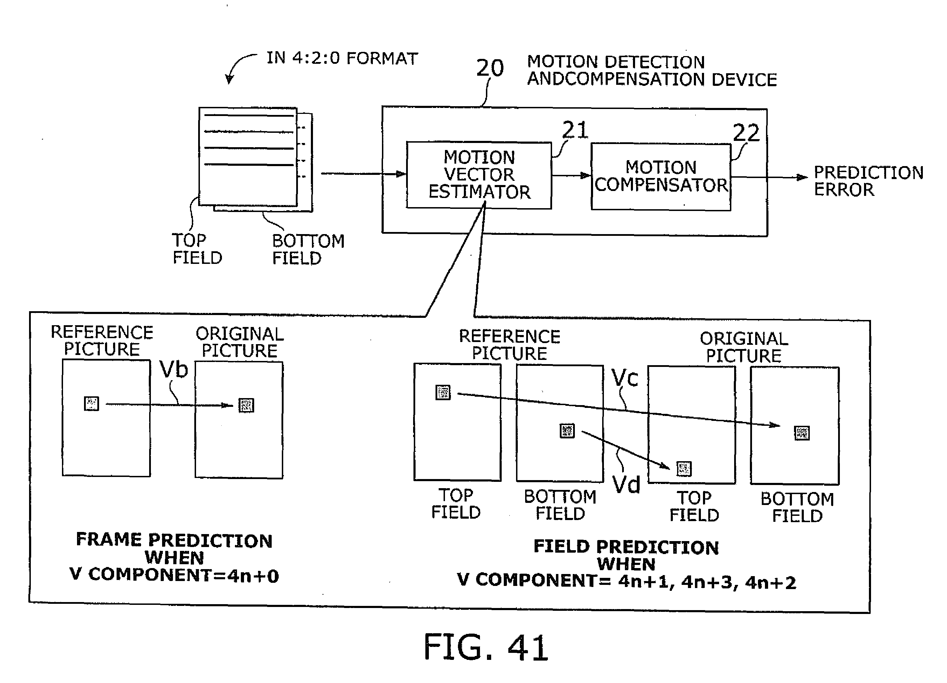

FIG. 41 shows a conceptual view of the second embodiment. The illustrated motion detection and compensation device 20 has a motion vector estimator 21 and a motion compensator 22. The motion vector estimator 21 estimates motion vectors using luminance components of an interlaced sequence of chrominance-subsampled video signals. The estimation is done in frame prediction mode, and the best matching motion vector found in this mode is referred to as the "frame vector." The motion vector estimator 21 selects an appropriate vector(s), depending on the vertical component of this frame vector.

Specifically, the vertical component of the frame vector can take a value of 4n+0, 4n+1, 4n+2, or 4n+3 (n: integer). For use in the subsequent motion compensation, the motion vector estimator 21 chooses that frame vector itself if its vertical component is 4n+0. In the case that the vertical component is 4n+1, 4n+2, and 4n+3, the motion vector estimator 21 switches its mode and searches again the reference picture for motion vectors in field prediction mode. The motion vectors found in this field prediction mode are called "field vectors." With the frame vectors or field vectors, whichever selected, the motion compensator 22 produces a predicted picture and calculates prediction error by subtracting the predicted picture from the original picture. In this way, the second embodiment avoids chrominance discrepancies by selecting either frame vectors or field vectors.

MPEG-2 coders can select either frame prediction or field prediction on a macroblock-by-macroblock basis for finding motion vectors. Normally, the frame prediction is used when top-field and bottom-field motion vectors tend to show a good agreement, and otherwise the field prediction is used.

In frame prediction mode, the resulting motion vector data contains a horizontal and vertical components of a vector extending from a reference picture to an original picture. The lower half of FIG. 41 shows a motion vector Vb in frame prediction mode, whose data consists of its horizontal and vertical components. In field prediction mode, on the other hand, the motion estimation process yields two motion vectors for each frame, and thus the resulting data includes horizontal and vertical components of each vector and field selection bits that indicate which field is the reference field of that vector. The lower half of FIG. 41 shows two example field vectors Vc and Vd. Data of Vc includes its horizontal and vertical components and a field selection bit indicating "top field" as a reference field. Data of Vd includes its horizontal and vertical components and a field selection bit indicating "bottom field" as a reference field.

The present embodiment enables field prediction mode when the obtained frame vector has a vertical component of either 4n+1, 4n+2, or 4n+3, and by doing so, it avoids the problem of chrominance discrepancies. The following will provide details of why this is possible.

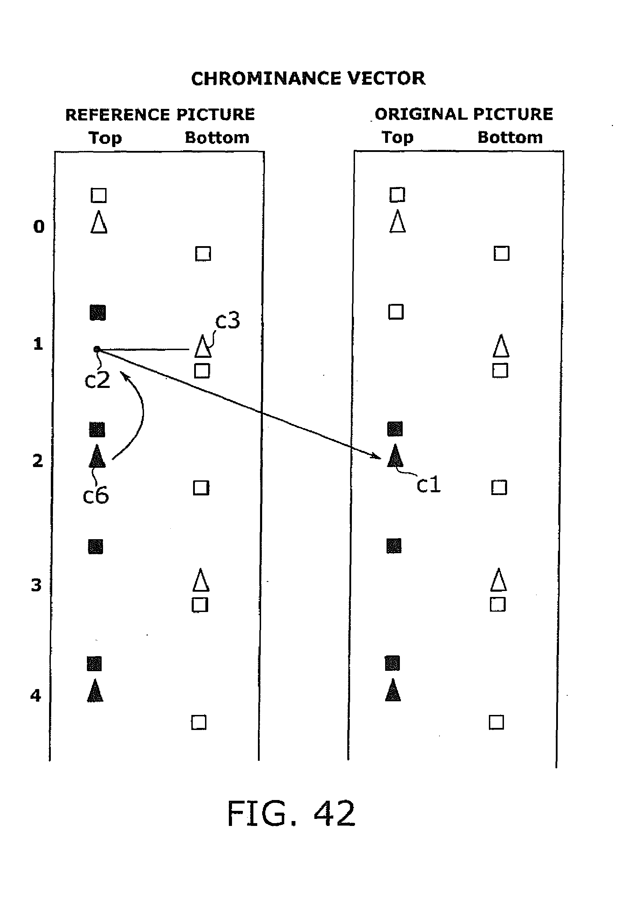

FIG. 42 shows how to avoid the chrominance discrepancy problem in field prediction. As described earlier in FIG. 11, a discrepancy in chrominance components is produced when a frame vector is of 4n+2 and thus, for example, a chrominance component c1 of the top-field original picture is supposed to be predicted by a chrominance component at pixel c2 in the top-field reference picture. Since there exists no corresponding chrominance component at that pixel c2, the motion compensator uses another chrominance component c3, which is in the bottom field of the same reference picture (this is what happens in frame prediction mode). The result is a large discrepancy between the original chrominance component c1 and corresponding reference chrominance component c3.

In the same situation as above, the motion compensator operating in field prediction will choose a closest pixel c6 in the same field even if no chrominance component is found in the referenced pixel c2. That is, in field prediction mode, the field selection bit of each motion vector permits the motion compensator to identify which field is selected as a reference field. When, for example, a corresponding top-field chrominance component is missing, the motion compensator 22 can choose an alternative pixel from among those in the same field, without the risk of producing a large error. This is unlike the frame prediction, which could introduce a large error when it mistakenly selects a bottom-field pixel as a closest alternative pixel.

As can be seen from the above, the second embodiment first scans luminance components in frame prediction mode, and if the best vector has a vertical component of 4n+2, 4n+1, or 4n+3, it changes its mode from frame prediction to field prediction to avoid a risk of chrominance discrepancies. Field prediction, however, produces a greater amount of vector data to describe a motion than frame prediction does, thus increasing the overhead of vector data in a coded video stream. To address this issue, the present embodiment employs a chrominance edge detector which detects a chrominance edge in each macroblock, so that the field prediction mode will be enabled only when a chrominance discrepancy is likely to cause a significant effect on the prediction efficiency.

The case where a discrepancy in chrominance components actually leads to an increased prediction error is when a strong color contrast exists at, for example, the boundary between an object image and its background. Such a high contrast portion in a picture is referred to as a "chrominance edge." Note that chrominance edges have nothing to do with luminance components. A black object on a white background never causes a chrominance edge because neither black nor white has colors (i.e., their Cb and Cr components agree with each other) and can be represented by luminance values alone (e.g., Y=0xff for white and Y=0x00 for black).

Think of, for example, a picture containing a rectangular object colored in blue (Cb>128, Cr<127) on a background color of red (Cb<127, Cr>128). This kind of color combination is vulnerable to chrominance discrepancies. When the object has a similar color tone (blue, red, whatever) to the background color, and they are distinguished only by their luminance contrast, the object image would not be damaged by chrominance discrepancies, if any.

As can be seen from the above, similarity among chrominance components lessens the effect of chrominance discrepancies related to motion vector estimation. Actually, figures and landscapes falls under this group of objects, the images of which hardly contain a sharp color contrast. For such objects, the motion vector estimator should not necessarily change its operation from frame prediction mode be switched from to field prediction mode. On the other hand, signboards and subtitles often have a large color contrast at object edges, and in those cases, a chrominance discrepancy would lead to artifacts such as colors spreading out of an object. A chrominance edge detector is therefore required to detect this condition.

Field Vectors

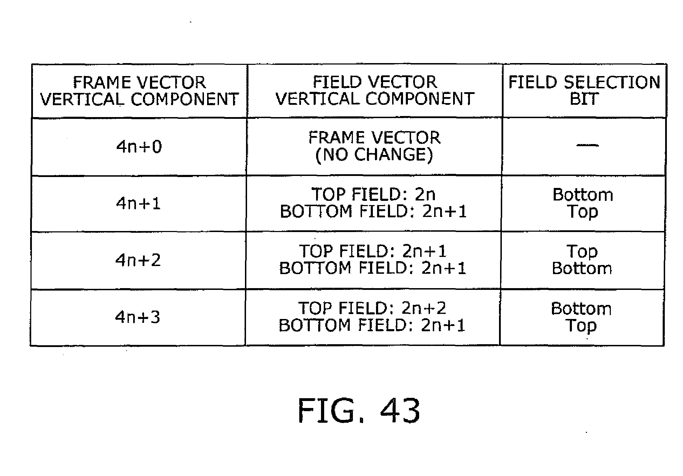

This section explains how field vectors are determined. FIG. 43 is a table showing the relationship between vertical components of a frame vector and those of field vectors. The motion vector estimator 21 first finds a motion vector in frame prediction mode. If its vertical component is either of 4n+2, 4n+1, and 4n+3, and if the chrominance edge detector indicates the presence of a chrominance edge, the motion vector estimator 21 switches itself to field prediction mode, thus estimating field vectors as shown in the table of FIG. 43.

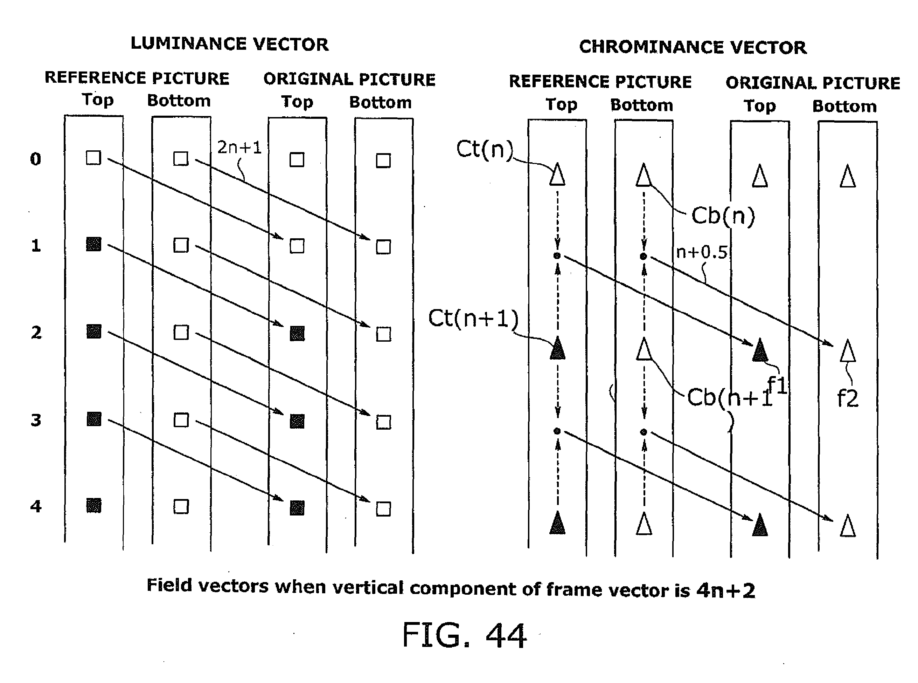

Referring now to FIGS. 44 to 46, the following will explain the field vectors specified in FIG. 43 by way of examples. First, FIG. 44 shows field vectors when the frame vector has a vertical component of 4n+2. In this case, the motion vector estimator 21 in field prediction mode produces the following two field vectors in the luminance domain. One field vector (referred to as the "top-field motion vector") points from the top-field reference picture to the top-field original picture, has a vertical component of 2n+1, and is accompanied by a field selection bit indicating "top field." The other field vector (referred to as the "bottom-field motion vector") points from the bottom-field reference picture to the bottom-field original picture, has a vertical component of 2n+1, and is accompanied by a field selection bit indicating "bottom field."

The above (2n+1) vertical component of vectors in the luminance domain translates into a half-sized vertical component of (n+0.5) in the chrominance domain. The intermediate chrominance component corresponding to the half-pel portion of this vector component is predicted by interpolation (or averaging) of two neighboring pixels in the relevant reference field. In the example of FIG. 44, the estimates of chrominance components f1 and f2 are $(Ct(n)+Ct(n+1))/2$ and $(Cb(n)+Cb(n+1))/2$, respectively.

While the above half-pel interpolation performed in field prediction mode has some error, the amount of this error is smaller than that in frame prediction mode, which is equivalent to the error introduced by a half-pel interpolation in the case of 4n+1 or 4n+3 (in the first embodiment described earlier). The reason for this difference is as follows: In field prediction mode, the half-pel interpolation takes place in the same picture field; i.e., it calculates an intermediate point from two pixels both residing in either top field or bottom field. In contrast, the half-pel interpolation in frame prediction mode calculates an intermediate point from one in the top field and the other in the bottom field (see FIGS. 13A and 13B).

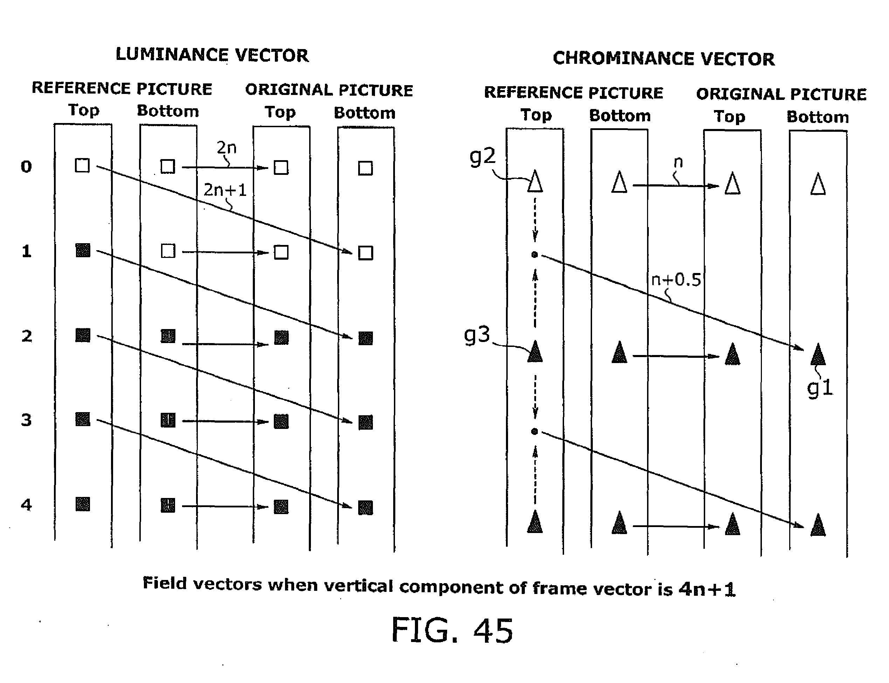

FIG. 45 shows field vectors when the frame vector has a vertical component of 4n+1. In this case, the motion vector estimator 21 in field prediction mode produces the following two field vectors in the luminance domain. One field vector (or top-field motion vector) points from the bottom-field reference picture to the top-field original picture, has a vertical component of 2n, and is accompanied by a field selection bit indicating "bottom field." The other field vector (or bottom-field motion vector) points from the top-field reference picture to the bottom-field original picture, has a vertical component of 2n+1, and is accompanied by a field selection bit indicating "top field."

The above (2n) and (2n+1) vertical components of vectors in the luminance domain translate into (n) and (n+0.5) vertical components in the chrominance domain, respectively. An intermediate chrominance component g1 is estimated by interpolation of neighboring components g2 and g3.

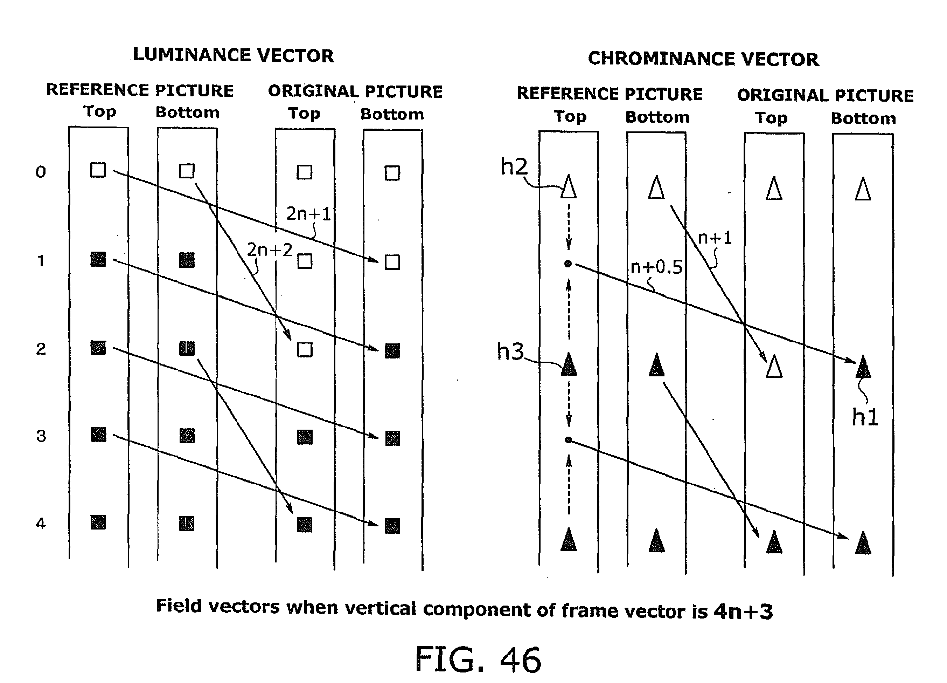

FIG. 46 shows field vectors when the frame vector has a vertical component of 4n+3. In this case, the motion vector estimator 21 in field prediction mode produces the following two field vectors in the luminance domain. One field vector (or time point motion vector) points from the bottom-field reference picture to the top-field original picture, has a vertical component of 2n+2, and is accompanied by a field selection bit indicating "bottom field." The other field vector (or bottom-field motion vector) points from the top-field reference picture to the bottom-field original picture, has a vertical component of 2n+1, and is accompanied by a field selection bit indicating "top field."

The above (2n+2) and (2n+1) vertical components of vectors in the luminance domain translate into (n+1) and (n+0.5) vertical components in the chrominance domain, respectively. An intermediate chrominance component h1 is estimated by interpolation of neighboring components h2 and h3.

2:3 Pullup and 3:2 Pulldown

This section describes some cases where the proposed functions of correcting motion vectors have to be disabled. In the preceding sections we have discussed how to circumvent chrominance discrepancies that could occur in the process of estimating motion vectors from interlaced video signals. The first embodiment has proposed addition of SAD offsets, and the second embodiment has proposed switching to field prediction mode. It should be noted, however, that the problem of chrominance discrepancies derives from interlacing of video frames. That is, non-interlaced video format, known as "progressive scanning," is inherently free from chrominance discrepancies. The motion vector correction functions described in the first and second embodiments are not required when the source video signal comes in progressive form. The motion vector estimator has to disable its correction functions accordingly.

One issue to consider is "2:3 pullup," a process to convert movie frames into television-compatible form by splitting a single video picture into a top-field picture and a bottom-field picture. While this is a kind of interlacing, those top and bottom fields are free from chrominance discrepancies, because they were originally a single progressive picture whose even-numbered lines and odd-numbered lines were sampled at the same time. When a source video signal comes in this type of interlaced format, the video coding device first applies a 3:2 pulldown conversion without enabling its motion vector correction functions.

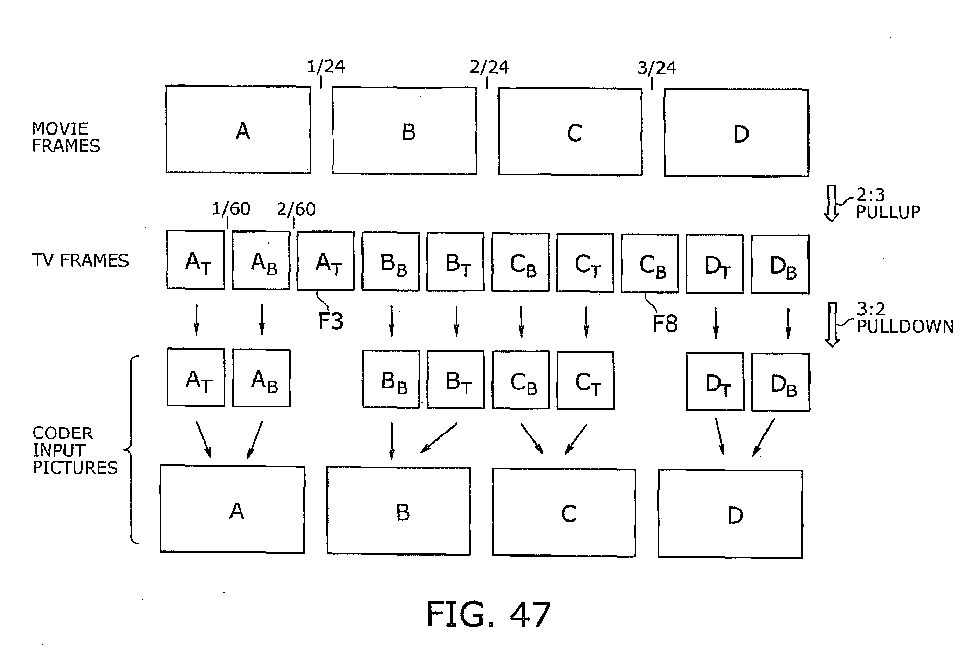

FIG. 47 shows a process of 2:3 pullup and 3:2 pulldown. When recording a movie, a motion picture camera captures images at 24 frames per second. Frame rate conversion is therefore required to play a 24-fps motion picture on 30-fps television system. This is known as "2:3 pullup" or "telecine conversion." Suppose now that a sequence of 24-fps movie frames A to D is to be converted into 30-fps TV frames. Frame A is converted to three pictures: top field $A_T$, bottom field $A_B$, and top field $A_T$. Frame B is then divided into bottom field $B_B$ and top field $B_T$. Frame C is converted to bottom field $C_B$, top field $C_T$, and bottom field $C_B$. Frame D is divided into top field $D_T$ and bottom field $D_B$. In this way, four 24-fps frames with a duration of one-sixth second ($(1/24)\times4$) are converted to ten 60-fps fields with a duration of one-sixth second ($(1/60)\times10$).

Now think of an MPEG encoder supplied with a video signal that has been converted to TV broadcasting format using 2:3 pullup techniques. In this case, a 3:2 pulldown process is applied to the sequence of fields before it goes to the MPEG encoder. This 3:2 pulldown discards duplicated fields (e.g., F3 and F8), which are unnecessary in coding. The resulting sequence of picture fields is then supplied to the encoder. The first top field $A_T$ and bottom field $A_B$ are consistent in terms of motion since they are originated from a single movie frame. The same is true of the subsequent fields that constitute frames B to D. The 3:2 pulldown video signals is composed of top and bottom fields as such. But the consistency between fields in this type of video input signals allows the video coding device to encode them without using its motion vector correction functions.

Video Coding Device

This section describes video coding devices employing a motion estimation and compensation device according to the present invention for use with MPEG-2 or other standard video compression system.

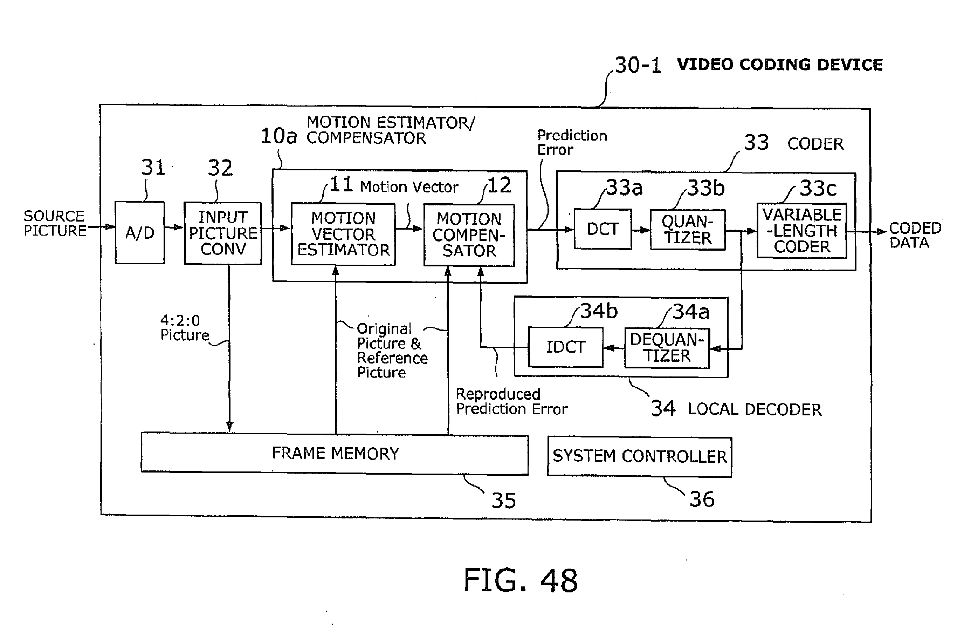

FIG. 48 shows a structure of a video coding device employing a motion estimation and compensation device 10 according to the first embodiment of the present invention. The illustrated video coding device 30-1 has the following components: an A/D converter 31, an input picture converter 32, a motion estimator/compensator 10a, a coder 33, a local decoder 34, a frame memory 35, and a system controller 36. The coder 33 is formed from a DCT unit 33a, a quantizer 33b, and a variable-length coder 33c. The local decoder 34 has a dequantizer 34a and an inverse DCT (IDCT) unit 34b.

The A/D converter 31 converts a given analog video signal of TV broadcasting or the like into a digital data stream, with the luminance and chrominance components sampled in 4:2:2 format. The input picture converter 32 converts this 4:2:2 video signal into 4:2:0 form. The resulting 4:2:0 video signal is stored in the frame memory 35. The system controller 36 manages frame images in the frame memory 35, controls interactions between the components in the video coding device 30-1, and performs other miscellaneous tasks.

The motion estimator/compensator 10a provides what have been described as the first embodiment. The motion vector estimator 11 reads each macroblock of an original picture from the frame memory 35, as well as a larger region of a reference picture from the same, so as to find a best matching reference block that minimizes the sum of absolute differences of pixels with respect to the given original macroblock, while giving some amount of offset to. The motion vector estimator 11 then calculates the distance between the best matching reference block and the original macroblock of interest, thus obtaining a motion vector. The motion compensator 12 also makes access to the frame memory 35 to retrieve video signals and create therefrom a predicted picture by using the detected motion vectors and subtracting corresponding reference images from the original picture. The resulting prediction error is sent out to the DCT unit 33a.

The DCT unit 33a performs DCT transform to convert the prediction error to a set of transform coefficients. The quantizer 33b quantizes the transform coefficients according to quantization parameters specified by the system controller 36. The results are supplied to the dequantizer 34a and variable-length coder 33c. The variable-length coder 33c compresses the quantized transform coefficients with Huffman coding algorithms, thus producing coded data.

The dequantizer 34a, on the other hand, dequantizes the quantized transform coefficients according to the quantization parameters and supplies the result to the subsequent IDCT unit 34b. The IDCT unit 34b reproduces the prediction error signal through an inverse DCT process. By adding the reproduced prediction error signal to the predicted picture, the motion compensator 12 produces a locally decoded picture and saves it in the frame memory 35 for use as a reference picture in the next coding cycle.

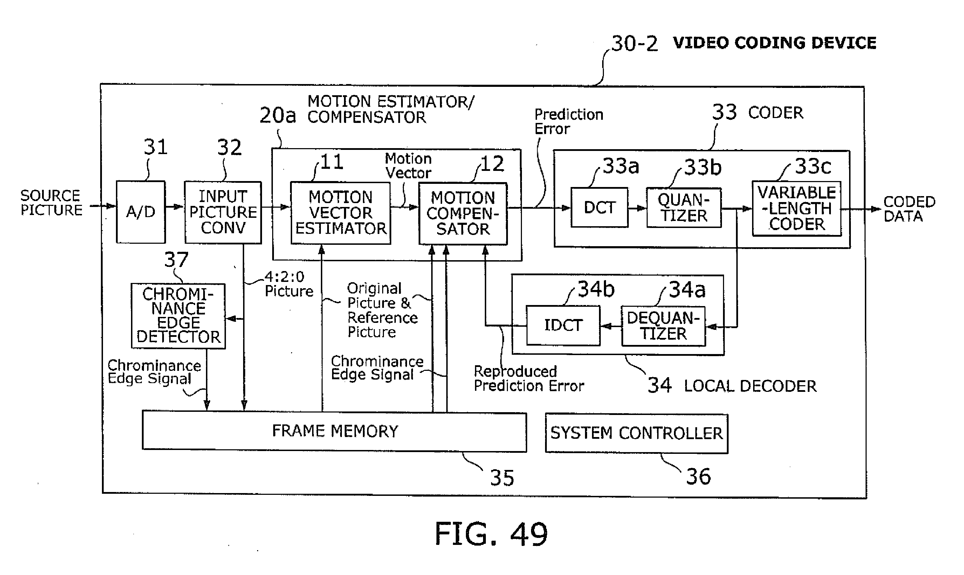

FIG. 49 shows a structure of a video coding device employing a motion estimation and compensation device 20 according to the second embodiment of the present invention. The illustrated video coding device 30-2 has basically the same structure as the video coding device 30-1 explained in FIG. 48, except for its motion estimator/compensator 20a and chrominance edge detector 37. The motion estimator/compensator 20a provides the functions of the second embodiment of the invention. The chrominance edge detector 37 is a new component that detects a chrominance edge in a macroblock when the motion estimator/compensator 20a needs to determine whether to select frame prediction mode or field prediction mode to find motion vectors.

The chrominance edge detector 37 examines the video signal supplied from the input picture converter 32 to find a chrominance edge in each macroblock and stores the result in the frame memory 35. The motion vector estimator 21 estimates motion vectors from the original picture, reference picture, and chrominance edge condition read out of the frame memory 35. For further details, see the first half of this section.

Conclusion

As can be seen from the above explanation, the present invention circumvents the problem of discrepancies in chrominance components without increasing the circuit size or processing load. To this end, the first embodiment adds appropriate offsets to SAD values corresponding to candidate blocks in a reference picture before choosing a best matching block with a minimum SAD value to calculate a motion vector. This approach only requires a small circuit to be added to existing motion vector estimation circuits. The second embodiment, on the other hand, provides a chrominance edge detector to detect a sharp color contrast in a picture, which is used determine to whether a chrominance discrepancy would actually lead to an increased prediction error. The second embodiment switches from frame prediction mode to field prediction mode only when the chrominance edge detector suggests to do so; otherwise, no special motion vector correction takes place. In this way, the second embodiment minimizes the increase in the amount of coded video data.

While the above first and second embodiments have been described separately, it should be appreciated that the two embodiments can be combined in an actual implementation. For example, it is possible to build a motion estimation and compensation device that uses the first embodiment to control candidate motion vectors in a moderate way and also exploits the second embodiment to handle exceptional cases that the first embodiment is unable to manage.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications may be regarded as falling within the scope of the appended claims.

A. A motion estimation and compensation device for estimating motion vectors and performing motion-compensated prediction, the device comprising:

a motion vector estimator that estimates motion vectors representing motion in given interlace-scanning chrominance-subsampled video signals by comparing each candidate block in a reference picture with a target block in an original picture by using a sum of absolute differences (SAD) in luminance as similarity metric, choosing a best matching candidate block that minimizes the SAD, and determining displacement of the best matching candidate block relative to the target block, wherein the SAD of each candidate block is given an offset determined from a vertical component of a candidate motion vector associated with that candidate block, and whereby the estimated motion vectors are less likely to cause discrepancies in chrominance components; and

a motion compensator that produces a predicted picture using the estimated motion vectors and calculates prediction error by subtracting the predicted picture from the original picture.

B. The motion estimation and compensation device according to A, wherein:

each candidate motion vector has a vertical component of 4n+0, 4n+1, 4n+2, or 4n+3 (n: integer), which represents vertical displacement of the candidate block associated with that candidate motion vector;
said motion vector estimator adds a zero offset to the SAD of a candidate block located at 4n+0; and
said motion vector estimator adds a non-zero offset to the SAD of a candidate block located at 4n+1, 4n+2, or 4n+3, the non-zero offset being determined adaptively from at least one of transmission bitrate, quantization parameters, chrominance edge condition, and prediction error of chrominance components.

C. The motion estimation and compensation device according to B, wherein:

said motion vector estimator adds a first offset to the SAD of a candidate block located at 4n+1 or 4n+3, and a second offset to SAD of a candidate block located at 4n+2, when transmission bitrate is low and the pictures being coded have a sharp chrominance edge is present;

the first offset is determined such that a candidate block at 4n+0 will be selected as the best matching candidate block when a difference between a mean absolute difference (MAD) of that candidate block at 4n+0 and an MAD of the candidate block at 4n+1 or 4n+3 is equal to or below a first threshold;

the second offset is determined such that a candidate block at 4n+0 will be selected as the best matching candidate block when a difference between an MAD of that candidate block at 4n+0 and an MAD of the candidate block at 4n+2 is equal to or below a second threshold that is greater than the first threshold; and

said motion vector estimator adds a third offset to the sum of absolute differences of a candidate block located at 4n+1, 4n+2, or 4n+3, when transmission bitrate is high, where the third offset is smaller than the first and second offsets to reduce preference for a candidate block at 4n+0.

D. The motion estimation and compensation device according to B, wherein:

said motion compensator calculates SAD values between the original picture and predicted picture, separately for luminance components and chrominance components;

said motion vector estimator calculates a first offset OfsA for candidate blocks at 4n+1 and 4n+3, as well as a second offset OfsB for candidate blocks at 4n+2, assuming that $\alpha \times$Cdiff is greater than Vdiff, where Vdiff is the SAD of luminance components, Cdiff is the SAD of chrominance components, and $\alpha$ is a correction coefficient;

the first offset OfsA is given by

$$\mathtt{OfsA} = \frac{\sum (\alpha \times \mathtt{Cdiff(i)} - \mathtt{Vdiff(i)})}{\mathtt{n_A}}$$

where i is an identifier of a block whose vertical vector component is 4n+1 or 4n+3, and $n_A$ represents the number of such blocks; and

the second offset OfsB is given by

$$\mathtt{OfsB} = \frac{\sum (\alpha \times \mathtt{Cdiff(j)} - \mathtt{Vdiff(j)})}{\mathtt{n_B}}$$

where j is an identifier of a block whose vertical vector component is 4n+2, and $n_B$ represents the number of such blocks.

E. The motion estimation and compensation device according to any of A to D, wherein said motion vector estimator stops giving offsets, when a non-interlaced video signal is supplied instead of the interlace-scanning chrominance-subsampled video signal, or when an interlaced video signal produced from a progressive video signal through 3: 2 pulldown conversion is supplied.

F. A video coding device, comprising:

(a) an input picture processor converting a digital video signal from 4:2:2 format into 4:2:0 format;
(b) a motion estimator/compensator comprising:

a motion vector estimator that estimates motion vectors in luminance components of given interlace-scanning chrominance-subsampled video signals by comparing each candidate block in a reference picture with a target block in an original picture by using a sum of absolute differences (SAD) as similarity metric, choosing a best matching candidate block that minimizes the SAD, and determining displacement of the best matching candidate block relative to the target block, wherein the SAD of each candidate block is given an offset determined from a vertical component of a candidate motion vector associated with that candidate block, whereby the estimated motion vectors are less likely to cause a discrepancy in chrominance components, and

a motion compensator that produces a predicted picture using the estimated motion vectors, calculates a prediction error by subtracting the predicted picture from the original picture, and produces a locally decoded picture by adding a reproduced prediction error to the predicted picture;

(c) a coder comprising:

a DCT unit that applies DCT transform to the prediction error to yield transform coefficients,
a quantizer that quantizes the transform coefficients, and
a variable-length coder that produces a coded data stream by variable-length coding the quantized transform coefficients;

(d) a local decoder comprising:

a dequantizer that dequantizes the quantized transform coefficients, and
an IDCT unit that produces the reproduced prediction error by applying an inverse DCT process to the dequantized transform coefficients; and

(e) a frame memory storing a plurality of frame pictures.

G. The video coding device according to F, wherein:

each candidate motion vector has a vertical component of 4n+0, 4n+1, 4n+2, or 4n+3 (n: integer), which represents vertical displacement of the candidate block associated with that candidate motion vector;
said motion vector estimator adds a zero offset to the SAD of a candidate block located at 4n+0; and
said motion vector estimator adds a non-zero offset to the SAD of a candidate block located at 4n+1, 4n+2, or 4n+3, the non-zero offset being determined adaptively from at least one of transmission bitrate, quantization parameters, chrominance edge condition, and prediction error of chrominance components.

H. The video coding device according to G, wherein:

said motion vector estimator adds a first offset to the SAD of a candidate block located at 4n+1 or 4n+3, and a second offset to SAD of a candidate block located at 4n+2, when the transmission bitrate is low and the original picture contains a sharp chrominance edge;
the first offset is determined such that a candidate block at 4n+0 will be selected as the best matching candidate block when a difference between a mean absolute difference (MAD) of that candidate block at 4n+0 and an MAD of the candidate block at 4n+1 or 4n+3 is equal to or below a first threshold;
the second offset is determined such that a candidate block at 4n+0 will be selected as the best matching candidate block when a difference between an MAD of that candidate block at 4n+0 and an MAD of the candidate block at 4n+2 is equal to or below a second threshold that is greater than the first threshold; and
said motion vector estimator adds a third offset to the SAD of a candidate block located at 4n+1, 4n+2, or 4n+3, when transmission bitrate is high, where the third offset is smaller than the first and second offsets to reduce preference for a candidate block at 4n+0.

I. The video coding device according to G, wherein:

said motion compensator calculates SAD values between the original picture and predicted picture, separately for luminance components and chrominance components;
said motion vector estimator calculates a first offset OfsA for candidate blocks at 4n+1 and 4n+3, as well as a second offset OfsB for candidate blocks at 4n+2, assuming that $\alpha \times$Cdiff is greater than Vdiff, where Vdiff is the SAD of luminance components, Cdiff is the SAD of chrominance components, and $\alpha$ is a correction coefficient;
the first offset OfsA is given by

$$OfsA = \frac{\sum (\alpha \times Cdiff(i) - Vdiff(i))}{n_A}$$

where i is an identifier of a block whose vertical vector component is 4n+1 or 4n+3, and $n_A$ represents the number of such blocks; and
the second offset OfsB is given by

$$OfsB = \frac{\sum(\alpha \times Cdiff(j) - Vdiff(j))}{n_B}$$

where j is an identifier of a block whose vertical vector component is 4n+2, and $n_B$ represents the number of such blocks.

J. The video coding device according to any of F to I
wherein said motion vector estimator stops giving offsets, when a non-interlaced video signal is received instead of the interlace-scanning chrominance-subsampled video signal, or when an interlaced video signal produced from a progressive video signal through 3:2 pulldown conversion is received.

K. A motion estimation and compensation device for estimating motion vectors and performing motion-compensated prediction, comprising:

a motion vector estimator that estimates motion vectors in luminance components of an interlaced-scanning chrominance-subsampled video signal, by estimating a frame vector in frame prediction mode, and then, depending on a vertical component of the estimated frame vector, switching from frame prediction mode to field prediction mode to estimate field vectors, whereby the estimated motion vectors are less likely to cause a discrepancy in chrominance components; and
a motion compensator that produces a predicted picture using the motion vectors that are found and calculates prediction error by subtracting the predicted picture from the original picture.

L. The motion estimation and compensation device according to K, wherein:

the frame vector has a vertical component of 4n+0, 4n+1, 4n+2, or 4n+3 (n: integer);
said motion vector estimator chooses the frame vector as the motion vector, when the vertical component is 4n+0; and
said motion vector estimator switches from frame prediction mode to field prediction mode to estimate field vectors and chooses the estimated field vectors as the motion vectors, when the vertical component is 4n+1 4n+2, or 4n+3.

M. The motion estimation and compensation device according to L, further comprising a chrominance edge detector that determines whether a target block in an original picture has a sharp chrominance edge that could cause chrominance discrepancies,
wherein said motion vector estimator switches from the frame prediction mode to the field prediction mode when the vertical component of the frame vector is 4n+1, 4n+2, or 4n+3, and when said chrominance edge detector indicates the presence of a sharp chrominance edge.

N. The motion estimation and compensation device according to L, wherein:

said motion vector estimator outputs a top-field motion vector and a bottom-field motion vector, each with a field selection bit indicating whether top field or bottom field of a reference picture is selected as a reference field;
when the vector component of the frame vector is 4n+1, the top-field motion vector has a vertical component of 2n and is accompanied by a field selection bit indicating "bottom field, and the bottom-field motion vector has a vertical component of 2n+1 and is accompanied by a field selection bit indicating "top field";
when the vector component of the frame vector is 4n+2, the top-field motion vector has a vertical component of 2n+1 and is accompanied by a field selection bit indicating "top field," and the bottom-field motion vector has a vertical component of 2n+1 and is accompanied by a field selection bit indicating "bottom field"; and
when the vector component of the frame vector is 4n+3, the top-field motion vector has a vertical component of 2n+2 and is accompanied by a field selection bit indicating "bottom field," and the bottom-field motion vector has a vertical component of 2n+1 and is accompanied by a field selection bit indicating "top field."

O. The motion estimation and compensation device according to any of K to N, wherein said motion vector estimator stops switching from frame prediction mode to field prediction mode, when a non-interlaced video signal is received instead of the interlace-scanning chrominance-subsampled video signal, or when an interlaced video signal produced from a progressive video signal through 3:2 pulldown conversion is received.

P. A video coding device, comprising:

(a) an input picture processor converting a digital video signal from 4:2:2 format into 4:2:0 format;
(b) a motion estimator/compensator comprising:

a motion vector estimator that estimates motion vectors in luminance components of an interlaced video signal in 4:2:0 format by estimating a frame vector in frame prediction mode, and then, depending on a vertical component of the estimated frame vector, switching from frame prediction mode to field prediction mode to estimate field vectors, whereby the estimated motion vectors are less likely to cause a discrepancy in chrominance components, and
a motion compensator that produces a predicted picture using the estimated motion vectors, calculates a prediction error by subtracting the predicted picture from the original picture, and produces a locally decoded picture by adding a reproduced prediction error to the predicted picture;

(c) a coder comprising:

a DCT unit that applies DCT transform to the prediction error to yield transform coefficients,
a quantizer that quantizes the transform coefficients, and
a variable-length coder that produces a coded data stream by variable-length coding the quantized transform coefficients;

(d) a local decoder comprising:

a dequantizer that dequantizes the quantized transform coefficients, and
an IDCT unit that produces the reproduced prediction error by applying an inverse DCT process to the dequantized transform coefficients; and

(e) a frame memory storing a plurality of frame pictures.

Q. The video coding device according to P , wherein:

the frame vector has a vertical component of 4n+0, 4n+1, 4n+2, or 4n+3 (n: integer);
said motion vector estimator chooses the frame vector as the motion vector, when the vertical component is 4n+0; and
said motion vector estimator switches from frame prediction mode to field prediction mode to estimate field vectors and chooses the estimated field vectors as the motion vectors, when the vertical component is 4n+1 4n+2, or 4n+3.

R. The video coding device according to Q , further comprising a chrominance edge detector that determines whether a target block in an original picture has a sharp chrominance edge that could cause chrominance discrepancies, wherein said motion vector estimator switches from the frame prediction mode to the field prediction mode when the vertical component of the frame vector is 4n+1, 4n+2, or 4n+3, and when said chrominance edge detector indicates the presence of a sharp chrominance edge.

S. The video coding device according to Q , wherein:

said motion vector estimator outputs a top-field motion vector and a bottom-field motion vector, each with a field selection bit indicating whether top field or bottom field of a reference picture is selected as a reference field;
when the vector component of the frame vector is 4n+1 the top-field motion vector has a vertical component of 2n and is accompanied by a field selection bit indicating "bottom field," and the bottom-field motion vector has a vertical component of 2n+1 and is accompanied by a field selection bit indicating "top field";
when the vector component of the frame vector is 4n+2, the top-field motion vector has a vertical component of 2n+1 and is accompanied by a field selection bit indicating "top field," and the bottom-field motion vector has a vertical component of 2n+1 and is accompanied by a field selection bit indicating "bottom field"; and when the vector component of the frame vector is 4n+3, the top-field motion vector has a vertical component of 2n+2 and is accompanied by a field selection bit indicating "bottom field," and the bottom-field motion vector has a vertical component of 2n+1 and is accompanied by a field selection bit indicating "top field."

T. The video coding device according to any of P to S , wherein said motion vector estimator stops switching from frame prediction mode to field prediction mode, when a non-interlaced video signal is received instead of the interlace-scanning chrominance-subsampled video signal, or when an interlaced video signal produced from a progressive video signal through 3:2 pulldown conversion is received.

**Claims**

1. A motion estimation and compensation device for estimating motion vectors and performing motion-compensated prediction, comprising:

   a motion vector estimator that estimates motion vectors in luminance components of an interlaced-scanning chrominance-subsampled video signal, by estimating a frame vector in frame prediction mode, and then, depending on a vertical component of the estimated frame vector, switching from frame prediction mode to field prediction mode to estimate field vectors, whereby the estimated motion vectors are less likely to cause a discrepancy in chrominance components; and
   a motion compensator that produces a predicted picture using the motion vectors that are found and calculates prediction error by subtracting the predicted picture from the original picture.

2. The motion estimation and compensation device according to claim 1, wherein:

   the frame vector has a vertical component of 4n+0, 4n+1, 4n+2, or 4n+3 (n: integer);
   said motion vector estimator chooses the frame vector as the motion vector, when the vertical component is 4n+0; and
   said motion vector estimator switches from frame prediction mode to field prediction mode to estimate field vectors and chooses the estimated field vectors as the motion vectors, when the vertical component is 4n+1, 4n+2, or 4n+3.

3. The motion estimation and compensation device according to claim 2, further comprising a chrominance edge detector that determines whether a target block in an original picture has a sharp chrominance edge that could cause chrominance discrepancies,
   wherein said motion vector estimator switches from the frame prediction mode to the field prediction mode when the vertical component of the frame vector is 4n+1, 4n+2, or 4n+3, and when said chrominance edge detector indicates the presence of a sharp chrominance edge.

4. The motion estimation and compensation device according to claim 2, wherein:

   said motion vector estimator outputs a top-field motion vector and a bottom-field motion vector, each with a field selection bit indicating whether top field or bottom field of a reference picture is selected as a reference field;
   when the vector component of the frame vector is 4n+1, the top-field motion vector has a vertical component of 2n and is accompanied by a field selection bit indicating "bottom field," and the bottom-field motion vector has a vertical component of 2n+1 and is accompanied by a field selection bit indicating "top field";
   when the vector component of the frame vector is 4n+2, the top-field motion vector has a vertical component of 2n+1 and is accompanied by a field selection bit indicating "top field," and the bottom-field motion vector has a vertical component of 2n+1 and is accompanied by a field selection bit indicating "bottom field"; and
   when the vector component of the frame vector is 4n+3, the top-field motion vector has a vertical component of 2n+2 and is accompanied by a field selection bit indicating "bottom field," and the bottom-field motion vector has a vertical component of 2n+1 and is accompanied by a field selection bit indicating "top field."

5. The motion estimation and compensation device according to claim 1, wherein said motion vector estimator stops switching from frame prediction mode to field prediction mode, when a non-interlaced video signal is received instead of the interlace-scanning chrominance-subsampled video signal, or when an interlaced video signal produced from a progressive video signal through 3:2 pulldown conversion is received.

6. A video coding device, comprising:

(a) an input picture processor converting a digital video signal from 4:2:2 format into 4:2:0 format;
(b) a motion estimation and compensation device as claimed in any of claims 1 to 5, wherein the motion compensator produces a locally decoded picture by adding a reproduced prediction error to the predicted picture;
(c) a coder comprising:

a DCT unit that applies DCT transform to the prediction error to yield transform coefficients,
a quantizer that quantizes the transform coefficients, and
a variable-length coder that produces a coded data stream by variable-length coding the quantized transform coefficients;

(d) a local decoder comprising:

a dequantizer that dequantizes the quantized transform coefficients, and
an IDCT unit that produces the reproduced prediction error by applying an inverse DCT process to the dequantized transform coefficients; and

(e) a frame memory storing a plurality of frame pictures.

# FIG. 1

4:2:0 FORMAT

TOP FIELD  BOTTOM FIELD

**MOTION ESTIMATION AND COMPENSATION DEVICE** — 10

MOTION VECTOR ESTIMATOR — 11

MOTION COMPENSATOR — 12

PREDICTION ERROR

Offset=0
for candidate block with
vertical displacement of 4n+0

Offset=OfsA
for candidate block with
vertical displacement of 4n+1

Offset=OfsB
for candidate block with
vertical displacement of 4n+2

Offset=OfsA
for candidate block with
vertical displacement of 4n+3

**REFERENCE PICTURE**

B0
B1
B2
B3

MOTION VECTOR

TIME

**ORIGINAL PICTURE**

TARGET BLOCK B

(OfsA and OfsB are set adaptively)

EP 2 026 584 A1

FIG. 2

FIG. 3

FIG. 4

FIG. 5

**Luminance Component**
**Top Field**

**Luminance Component**
**Bottom Field**

Y1  Y2

Y3  Y4

**Position x1**

**Position x1**

# FIG. 6

EP 2 026 584 A1

REFERENCE PICTURE
IN 4:2:0 FORMAT

Chrominance Component
Top Field

Cb,Cr

Chrominance Component
Bottom Field

Position x1

Position x1

FIG. 7

FIG. 8

EP 2 026 584 A1

ORIGINAL PICTURE
IN 4:2:0 FORMAT

Chrominance Component
Top Field

Chrominance Component
Bottom Field

Position x2

Position x2

FIG. 9

EP 2 026 584 A1

FIG. 10

CHROMINANCE VECTOR

FIG. 11

## LUMINANCE VECTOR

## CHROMINANCE VECTOR

**FIG. 12A**

**FIG. 12B**

FIG. 13A

FIG. 13B

FIG. 14A   FIG. 14B

EP 2 026 584 A1

FIG. 15A

FIG. 15B

EP 2 026 584 A1

FIG. 16A

FIG. 16B

OFFSET TABLE

| MOTION VECTOR VERTICAL COMPONENT (n: INTEGER) | OFFSET VALUE |
|---|---|
| 4n+0 | 0 |
| 4n+1 | OfsA |
| 4n+2 | OfsB |
| 4n+3 | OfsA |

# FIG. 17

FIG. 18B

FIG. 18A

REFERENCE PICTURE

ORIGINAL PICTURE

FIG. 19A

FIG. 19B

```
int   Rx, Ry, x, y, Vx, Vy                          ⎤
                                                    ⎬ S1
int   Vdiff=(16*16)*255+1;                          ⎟
                                                    ⎟
int   diff;                                         ⎦
for(Ry=0;Ry<479-16;Ry++){                           ⎤ S2
                                                    ⎬
  for(Rx=0;Rx<719-16;Rx++){                         ⎦
    switch(Ry-My*16)%4{                             ⎤
                                                    ⎟
      case0: diff=0; break;                         ⎟
                                                    ⎬ S3
      case1: diff=OfsA; break;                      ⎟
                                                    ⎟
      case2: diff=OfsB; break;                      ⎟
                                                    ⎟
      case3: diff=OfsA; break;                      ⎦

    }
    for(y=0;y<16;y++){                                       ⎤ S4
                                                             ⎟
      for(x=0;x<16;x++){                                     ⎟
                                                             ⎬
        diff=diff+abs(Yo[My*16+y][Mx*16+x]-Yr[Ry+y][Rx+x]); ⎟
                                                             ⎟
      }                                                      ⎦
    }
    if(Vdiff>diff){                                 ⎤ S5
                                                    ⎬
        Vdiff=diff,Vx=Rx,Vy=Ry;                     ⎦
    }
  }
}
Vx=Vx-Mx*16;Vy=Vy-My*16;                            ⎤ S6
                                                    ⎦
```

# FIG. 20

ORIGINAL PICTURE

Yo[0][16]

Pixel 0    Pixel 16    Pixel 32

Line 0 →

| (My,Mx) =(0,0) | (My,Mx) =(0,1) | M1 |

Yo[15][31]

Line 16 →

| (My,Mx) =(1,0) | (My,Mx) =(1,1) |

Line 32 →

FIG. 21A

REFERENCE PICTURE

Pixel 0    Pixel 16    Pixel 32

Line 0 →

Line 16 →

Yr[16][16]    M2

Yr[31][31]

Line 32 →

FIG. 21B

EP 2 026 584 A1

## MOTION VECTOR V-COMPONENT
### 4n+2

**REFERENCE PICTURE**

**ORIGINAL PICTURE**

EP 2 026 584 A1

# FIG. 22

## DIFFERENCE PICTURE
### 4n+2

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |

## FIG. 23

FIG. 24

**DIFFERENCE PICTURE**
**4n+1**

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | +50 | +50 | +50 | +50 | +50 | +50 | 0 | 0 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |

# FIG. 25

## MOTION VECTOR V-COMPONENT
### 4n+0

**REFERENCE PICTURE**                                    **ORIGINAL PICTURE**

FIG. 26

EP 2 026 584 A1

**DIFFERENCE PICTURE**
**4n+0**

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | +50 | +50 | +50 | +50 | +50 | +50 | 0 | 0 | 0 |
| 0 | 0 | 0 | 0 | 0 | 0 | +50 | +50 | +50 | +50 | +50 | +50 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0. | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |

# FIG. 27

# MOTION VECTOR V-COMPONENT
## 4n+3

**REFERENCE PICTURE**          **ORIGINAL PICTURE**

# FIG. 28

## DIFFERENCE PICTURE
## 4n+3

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | -50 | -50 | -50 | -50 | -50 | -50 | 0 | 0 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |

# FIG. 29

# MOTION VECTOR V-COMPONENT
## 4n+1

**REFERENCE PICTURE**

**ORIGINAL PICTURE**

# FIG. 30

## DIFFERENCE PICTURE
### 4n+1

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |

## FIG. 31

**REFERENCE PICTURE**

**ORIGINAL PICTURE**

FIG. 32

## DIFFERENCE PICTURE
## 4n+0

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | +50 | +50 | +50 | +50 | +50 | +50 | 0 | 0 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |

## FIG. 33

MOTION VECTOR V-COMPONENT
4n+2

ORIGINAL PICTURE

REFERENCE PICTURE

FIG. 34

**DIFFERENCE PICTURE**
**4n+2**

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | -50 | -50 | -50 | -50 | -50 | -50 | 0 | 0 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |
| 0 | 0 | 0 | 0 | +50 | +50 | 0 | 0 | 0 | 0 | -50 | -50 | 0 |
| 0 | 0 | 0 | 0 | -50 | -50 | 0 | 0 | 0 | 0 | +50 | +50 | 0 |

FIG. 35

## MOTION VECTOR V-COMPONENT
### 4n+2

FIG. 36

**DIFFERENCE PICTURE**
**4n+2**

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 |

# FIG. 37

**REFERENCE PICTURE**                    **ORIGINAL PICTURE**

REFERENCE PICTURE:

| 200 | 200 | 200 | 200 | 200 | 200 | 200 | 200 | 200 | 200 | 200 | 200 | 200 |
|-----|-----|-----|-----|-----|-----|-----|-----|-----|-----|-----|-----|-----|
| 200 | 200 | 200 | 200 | 200 | 200 | 200 | 200 | 200 | 200 | 200 | 200 | 200 |
| 200 | 200 | 40 | 40 | 40 | 40 | 40 | 40 | 200 | 200 | 200 | 200 | 200 |
| 200 | 200 | 200 | 200 | 40 | 40 | 40 | 40 | 40 | 40 | 200 | 200 | 200 |
| 200 | 200 | 160 | 160 | 160 | 160 | 160 | 160 | 200 | 200 | 200 | 200 | 200 |
| 200 | 200 | 200 | 200 | 160 | 160 | 160 | 160 | 160 | 160 | 200 | 200 | 200 |
| 200 | 200 | 40 | 40 | 40 | 40 | 40 | 40 | 200 | 200 | 200 | 200 | 200 |
| 200 | 200 | 200 | 200 | 40 | 40 | 40 | 40 | 40 | 40 | 200 | 200 | 200 |
| 200 | 200 | 160 | 160 | 160 | 160 | 160 | 160 | 200 | 200 | 200 | 200 | 200 |
| 200 | 200 | 200 | 200 | 160 | 160 | 160 | 160 | 160 | 160 | 200 | 200 | 200 |
| 200 | 200 | 40 | 40 | 40 | 40 | 40 | 40 | 200 | 200 | 200 | 200 | 200 |
| 200 | 200 | 200 | 200 | 40 | 40 | 40 | 40 | 40 | 40 | 200 | 200 | 200 |
| 200 | 200 | 160 | 160 | 160 | 160 | 160 | 160 | 200 | 200 | 200 | 200 | 200 |
| 200 | 200 | 200 | 200 | 160 | 160 | 160 | 160 | 160 | 160 | 200 | 200 | 200 |

ORIGINAL PICTURE:

| 200 | 200 | 200 | 200 | 200 | 200 | 200 | 200 | 200 | 200 | 200 | 200 | 200 |
|-----|-----|-----|-----|-----|-----|-----|-----|-----|-----|-----|-----|-----|
| 200 | 200 | 200 | 200 | 200 | 200 | 200 | 200 | 200 | 200 | 200 | 200 | 200 |
| 200 | 200 | 200 | 200 | 200 | 200 | 200 | 200 | 200 | 200 | 200 | 200 | 200 |
| 200 | 200 | 200 | 200 | 40 | 40 | 40 | 40 | 40 | 40 | 200 | 200 | 200 |
| 200 | 200 | 200 | 200 | 200 | 200 | 40 | 40 | 40 | 40 | 40 | 40 | 200 |
| 200 | 200 | 200 | 200 | 160 | 160 | 160 | 160 | 160 | 160 | 200 | 200 | 200 |
| 200 | 200 | 200 | 200 | 200 | 200 | 160 | 160 | 160 | 160 | 160 | 160 | 200 |
| 200 | 200 | 200 | 200 | 40 | 40 | 40 | 40 | 40 | 40 | 200 | 200 | 200 |
| 200 | 200 | 200 | 200 | 200 | 200 | 40 | 40 | 40 | 40 | 40 | 40 | 200 |
| 200 | 200 | 200 | 200 | 160 | 160 | 160 | 160 | 160 | 160 | 200 | 200 | 200 |
| 200 | 200 | 200 | 200 | 200 | 200 | 160 | 160 | 160 | 160 | 160 | 160 | 200 |
| 200 | 200 | 200 | 200 | 40 | 40 | 40 | 40 | 40 | 40 | 200 | 200 | 200 |
| 200 | 200 | 200 | 200 | 200 | 200 | 40 | 40 | 40 | 40 | 40 | 40 | 200 |

**FIG. 38**

EP 2 026 584 A1

## DIFFERENCE PICTURE
## 4n+0

| 0 | 0 | 0 | 0 | 0 | 0 | 0 | 0 | 0 | 0 | 0 | 0 | 0 |
|---|---|---|---|---|---|---|---|---|---|---|---|---|
| 0 | 0 | 0 | 0 | 0 | 0 | 0 | 0 | 0 | 0 | 0 | 0 | 0 |
| 0 | 0 | 0 | 0 | +160 | +160 | +160 | +160 | +160 | +160 | 0 | 0 | 0 |
| 0 | 0 | 0 | 0 | 0 | 0 | +160 | +160 | +160 | +160 | +160 | +160 | 0 |
| 0 | 0 | 0 | 0 | -120 | -120 | -120 | -120 | -120 | -120 | 0 | 0 | 0 |
| 0 | 0 | 0 | 0 | 0 | 0 | -120 | -120 | -120 | -120 | -120 | -120 | 0 |
| 0 | 0 | 0 | 0 | +120 | +120 | +120 | +120 | +120 | +120 | 0 | 0 | 0 |
| 0 | 0 | 0 | 0 | 0 | 0 | +120 | +120 | +120 | +120 | +120 | +120 | 0 |
| 0 | 0 | 0 | 0 | -120 | -120 | -120 | -120 | -120 | -120 | 0 | 0 | 0 |
| 0 | 0 | 0 | 0 | 0 | 0 | -120 | -120 | -120 | -120 | -120 | -120 | 0 |
| 0 | 0 | 0 | 0 | +120 | +120 | +120 | +120 | +120 | +120 | 0 | 0 | 0 |
| 0 | 0 | 0 | 0 | 0 | 0 | +120 | +120 | +120 | +120 | +120 | +120 | 0 |
| 0 | 0 | 0 | 0 | -120 | -120 | -120 | -120 | -120 | -120 | 0 | 0 | 0 |
| 0 | 0 | 0 | 0 | 0 | 0 | -120 | -120 | -120 | -120 | -120 | -120 | 0 |

## FIG. 39

```
int  diff_CB[8][8], diff_CR[8][8]

int Cdiff;

Cdiff=0;

for(y=0; y<8; y++){

    for(x=0; x<8; x++){

        diff_CB[y][x]=CBo[My*8+y][Mx*8+x]-CBr[My*8+Vy/2+y][Mx*8+Vx/2+x];

        diff_CR[y][x]=CRo[My*8+y][Mx*8+x]-CRr[My*8+Vy/2+y][Mx*8+Vx/2+x];

        Cdiff=Cdiff+abs(diff_CB[y][x])+abs(diff_CR[y][x]);


    }

}
```

## FIG. 40

FIG. 41

FIG. 42

| FRAME VECTOR VERTICAL COMPONENT | FIELD VECTOR VERTICAL COMPONENT | FIELD SELECTION BIT |
|---|---|---|
| 4n+0 | FRAME VECTOR (NO CHANGE) | — |
| 4n+1 | TOP FIELD: 2n BOTTOM FIELD: 2n+1 | Bottom Top |
| 4n+2 | TOP FIELD: 2n+1 BOTTOM FIELD: 2n+1 | Top Bottom |
| 4n+3 | TOP FIELD: 2n+2 BOTTOM FIELD: 2n+1 | Bottom Top |

# FIG. 43

# LUMINANCE VECTOR

**REFERENCE PICTURE**
Top    Bottom

**ORIGINAL PICTURE**
Top    Bottom

# CHROMINANCE VECTOR

**REFERENCE PICTURE**
Top    Bottom

**ORIGINAL PICTURE**
Top    Bottom

Field vectors when vertical component of frame vector is 4n+2

# FIG. 44

EP 2 026 584 A1

**LUMINANCE VECTOR**

REFERENCE PICTURE     ORIGINAL PICTURE
Top      Bottom      Top      Bottom

**CHROMINANCE VECTOR**

REFERENCE PICTURE     ORIGINAL PICTURE
Top      Bottom      Top      Bottom

Field vectors when vertical component of frame vector is $4n+1$

# FIG. 45

Field vectors when vertical component of frame vector is **4n+3**

## FIG. 46

EP 2 026 584 A1

FIG. 47

FIG. 48

FIG. 49

EP 2 026 584 A1

YCbCr YCbCr  Original video information

↓ Horizontal subsampling of
chromatic components Cb and Cr

YCb YCr  Average video information = 16 bit/pel
(Luminance:Chrominance = 2:1)

**4:2:2 FORMAT**

| YCb | YCr | YCb | YCr | ● ● ● ● ● |
| YCb | YCr | YCb | YCr | ● ● ● ● ● |
| YCb | YCr | YCb | YCr | ● ● ● ● ● |
| YCb | YCr | YCb | YCr | ● ● ● ● ● |

# FIG. 50

*PRIOR ART*

YCbCr | YCbCr

Original video information

YCbCr | YCbCr

Horizontal and vertical
subsampling of chromatic
components Cb and Cr

YCb | YCr

Y | Y

Average video information = 12 bit/pel
(Luminance:Chrominance = 4:1)

**4:2:0 FORMAT**

| YCb | YCr | YCb | YCr | ● ● ● ● ● |
| Y | Y | Y | Y | ● ● ● ● ● |
| YCb | YCr | YCb | YCr | ● ● ● ● ● |
| Y | Y | Y | Y | ● ● ● ● ● |

# FIG. 51
*PRIOR ART*

**REFERENCE PICTURE**

MOTION VECTOR V

Best matching macroblock

mb1-1

mb1

Macroblock at the same location as mb2

Fr1 PREVIOUS FRAME

**ORIGINAL PICTURE**

TARGET MACROBLOCK

mb2

16 PELS

16 LINES

Fr2 PRESENT FRAME

TIME

FIG. 52

*PRIOR ART*

EP 2 026 584 A1

# FIG. 53
## *PRIOR ART*

REFERENCE PICTURE

PREDICTED PICTURE

mb1-2

Pr2

mb1-1

V

Fr1

PREDICTED PICTURE

Pr2

ORIGINAL PICTURE

Fr2

DIFFERENCE PICTURE
(PREDICTION ERROR)

Er2

(NO ERRORS)

Europäisches
Patentamt

European
Patent Office

Office européen
des brevets

# EUROPEAN SEARCH REPORT

**Application Number**

EP 08 16 7885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 863 675 A (GEN INSTRUMENT CORP [US]) 9 September 1998 (1998-09-09) * page 8, line 8 - line 54 * * page 6, line 10 - page 12, line 37; figures 2-9 * | 1-6 | INV. H04N7/26 |
| A | EP 1 406 448 A (FUJITSU LTD [JP]) 7 April 2004 (2004-04-07) * paragraphs [0005] - [0007], [0067] - [0083]; figures 10,15-18 * | 1-6 | |
| A | EP 1 411 719 A (BROADCOM CORP [US]) 21 April 2004 (2004-04-21) * paragraphs [0012], [0013], [0034], [0042] - [0045], [0075] - [0077]; figures 1,3-5,10,13-15 * | 1-6 | |
| A | EP 1 359 768 A1 (MICROSOFT CORP [US]) 5 November 2003 (2003-11-05) * paragraphs [0002] - [0007], [0018] - [0033], [0129] - [0136] * | 1-6 | |
| A | "Information technology - Generic coding of moving pictures and associated audio information: Video" ITU-T STANDARD IN FORCE (I), INTERNATIONAL TELECOMMUNICATION UNION, GENEVA,, CH, no. H262 2/, 1 February 2000 (2000-02-01), XP017401436 * paragraphs [6.1.1.8], [6.1.1.9], [6.1.3], [07.6], [7.6.3.7]; figures 6-10,6-11,6-14 * | 1-6 | |

|   |   |
|---|---|
| | TECHNICAL FIELDS SEARCHED (IPC) |
| | H04N |

The present search report has been drawn up for all claims

| Place of search | Date of completion of the search | Examiner |
|---|---|---|
| Munich | 23 December 2008 | Kuhn, Peter |

EPO FORM 1503 03.82 (P04C01)

## ANNEX TO THE EUROPEAN SEARCH REPORT
## ON EUROPEAN PATENT APPLICATION NO.

EP 08 16 7885

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2008

| Patent document cited in search report | | Publication date | Patent family member(s) | | Publication date |
|---|---|---|---|---|---|
| EP 0863675 | A | 09-09-1998 | AU | 5740198 A | 10-09-1998 |
| | | | BR | 9800853 A | 03-11-1999 |
| | | | CA | 2230567 A1 | 07-09-1998 |
| | | | CN | 1226781 A | 25-08-1999 |
| | | | JP | 11004441 A | 06-01-1999 |
| | | | NO | 980950 A | 08-09-1998 |
| | | | US | 6026195 A | 15-02-2000 |
| | | | US | 6005980 A | 21-12-1999 |
| EP 1406448 | A | 07-04-2004 | CA | 2439886 A1 | 06-03-2004 |
| | | | CN | 1491044 A | 21-04-2004 |
| | | | JP | 3791922 B2 | 28-06-2006 |
| | | | JP | 2004120732 A | 15-04-2004 |
| | | | KR | 20040022171 A | 11-03-2004 |
| | | | KR | 20070051803 A | 18-05-2007 |
| | | | KR | 20070051804 A | 18-05-2007 |
| | | | KR | 20070051805 A | 18-05-2007 |
| | | | KR | 20070051806 A | 18-05-2007 |
| | | | KR | 20070103332 A | 23-10-2007 |
| | | | KR | 20070103333 A | 23-10-2007 |
| | | | KR | 20070103334 A | 23-10-2007 |
| | | | KR | 20070103335 A | 23-10-2007 |
| | | | US | 2004047420 A1 | 11-03-2004 |
| EP 1411719 | A | 21-04-2004 | US | 2004075764 A1 | 22-04-2004 |
| EP 1359768 | A1 | 05-11-2003 | AT | 336144 T | 15-09-2006 |
| | | | DE | 60307354 T2 | 14-12-2006 |
| | | | ES | 2269850 T3 | 01-04-2007 |
| | | | HK | 1060241 A1 | 01-12-2006 |
| | | | JP | 2003333604 A | 21-11-2003 |
| | | | US | 2003194010 A1 | 16-10-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004219083 A

- JP 2001238228 A